# EUROPEAN PATENT APPLICATION

(11) **EP 3 840 244 A1**
(43) Date of publication of application: **23.06.2021**
(21) Application number: 19849357.9
(22) Date of filing: 13.08.2019
(51) Int. Cl.: H04B 7/06, H04W 72/04

(54) **SIGNAL TRANSMISSION METHOD, BEAM DETERMINATION METHOD AND APPARATUSES THEREFOR**

(30) Priority: 17.08.2018 CN 201810942908
(71) Applicant: Datang Mobile Communications Equipment Co., Ltd., Beijing 100083 (CN)
(72) Inventor: HUANG, Qiuping, Beijing 100191 (CN); CHEN, Runhua, Beijing 100191 (CN); GAO, Qiubin, Beijing 100191 (CN)
(74) Representative: Nony
(86) International application number: PCT/CN2019/100449
(87) International publication number: WO 2020/034969

(57) **Abstract**

Disclosed are a signal transmission method, a beam determination method and apparatuses therefor. In the method, a base station instructs a terminal to send a first uplink signal, and sends uplink beam indication information to the terminal, wherein the uplink beam indication information is used for indicating a first signal for determining a transmission beam of the first uplink signal, and the first signal comprises a PRACH.

## Description

### Cross-Reference of Related Applications

This application claims the priority of Chinese Patent Application No. 201810942908.2, filed with the China National Intellectual Property Administration on August 17, 2018 and entitled "Signal Transmission Method, Beam Determination Method and Apparatuses therefor", the entire content of which is incorporated herein by reference.

### Field

This application relates to the technical field of wireless communications, and in particular to a signal transmission method, a beam determination method and apparatuses therefor.

### Background

A wireless transmitter (such as base station, terminal) equipped with a plurality of antennas can form a beam pointing to a specific direction by beamforming, to send wireless signals. The width and direction of the beam can be flexibly adjusted by applying appropriate weights on respective antenna units. The beamforming can be performed in the digital domain or analog domain.

The analog beamforming is mainly used for high frequency bands, such as a frequency band from 6 GHz to 52.6 GHz. This frequency band is usually called the millimeter wave band (mm Wave band). Compared with the frequency band below 6 GHz, the propagation loss (for example, caused by path loss, scattering, reflection, etc.) of high frequency bands is more serious. Due to the mobility and rotation of the terminal, the beam blocking between the transmitter and the receiver is more frequent.

From the perspective of physical layer, the random access process of the L1 layer includes the processes of sending a random access sequence (Msg1) on a Physical Random Access Channel (PRACH), sending the Random Access Response (RAR) information (Msg2) on a Physical Downlink Control Channel (PDCCH)/Physical Downlink Shared Channel (PDSCH), and if necessary, sending Msg3 on a Physical Uplink Shared Channel (PUSCH) and sending the contention resolution information on the PDSCH.

In the current protocol version of the NR system, the sending beam of the PRACH can be used as the sending beam of the cell-specific Physical Uplink Control Channel (PUCCH) prior to the Radio Resource Control (RRC) parameter configuration. After the terminal is configured with RRC parameters, the PRACH is no longer used for the uplink beam management of the PUSCH or PUCCH. The sending beam of the PUCCH is configured semi-statically by the base station and is realized by configuring a source reference signal, where the source reference signal may be a Channel State Information Reference Signal (CSI-RS), or Synchronization Signal/Physical broadcast channel Block (SSB), or Sounding Reference Signal (SRS).

However, the source reference signal of the PUCCH can be configured as a CSI-RS or an SSB only when the correspondence between the uplink beam and the downlink beam is established. If the correspondence between the uplink beam and the downlink beam is not established, the source reference signal of the PUCCH can only be configured as an SRS. A source reference signal being an SRS can be configured for the PUCCH only after the base station uses the SRS for beam scanning, which will increase the delay of the PUCCH configuration.

For the PUSCH transmission, the base station needs to send the SRS for acquiring the PUSCH CSI after completing the downlink receiving beam scanning and/or completing the uplink sending beam scanning through SRS for a terminal and after configuring the "Spatial Relation Info" for the SRS resources for CSI acquisition of the PUSCH, and then the uplink sending beam of the PUSCH is determined through the SRS resources indicated by the base station. This causes the larger delay of the PUSCH transmission process.

Therefore, how to determine the sending beam of an uplink signal and send the uplink signal based on the sending beam to reduce the sending delay of the uplink signal is a problem that needs to be solved at present.

### Brief Summary

Embodiments of the application provide a signal transmission method, a beam determination method and apparatuses therefor.

In a first aspect, a signal transmission method is provided, which include: instructing, by a base station, a terminal to send a first uplink signal, and sending, by the base station, uplink beam indication information to the terminal, herein the uplink beam indication information indicates a first signal for determining a sending beam of the first uplink signal, and the first signal includes a signal carried on a PRACH.

Optionally, the uplink beam indication information informs the terminal to use a sending beam of the PRACH to determine the sending beam of the first uplink signal.

Optionally, the first signal further includes at least one of: SRS, Synchronization Signal/physical broadcast channel Block (SSB), and Channel State Information Reference Signal (CSI-RS).

Optionally, the uplink beam indication information includes indication information indicating whether the terminal uses a sending beam of the PRACH to determine the sending beam of the first uplink signal.

Optionally, the uplink beam indication information includes indication information informing the terminal to use a sending beam in a sending beam group where a sending beam of the PRACH is located as the sending beam of the first uplink signal.

Optionally, the method further includes: sending, by the base station, beam group indication information to the terminal or the uplink beam indication information includes beam group indication information, herein the beam group indication information indicates the sending beam group where the sending beam of the PRACH is located; and/or, sending, by the base station, beam indication information to the terminal or the uplink beam indication information includes beam indication information, herein the beam indication information indicates beams in the sending beam group where the sending beam of the PRACH is located.

Optionally, the first signal is a signal carried on one or more PRACHs, and the uplink beam indication information includes information indicating the one or more PRACHs from a group of candidate PRACHs.

Optionally, the first signal is a signal carried on the latest PRACH carrying Msgl when the terminal initially accesses a cell where the first uplink signal is located; or the first signal is a signal carried on the latest PRACH carrying Msgl in a cell where the first uplink signal is located before that the terminal receives the uplink beam indication information; or the first signal is a signal carried on the latest PRACH carrying Msgl in a cell corresponding to the first uplink signal before that the terminal receives scheduling information of the first uplink signal; or the first signal is a signal carried on the latest PRACH carrying Msg1 in a cell corresponding to the first uplink signal before that the terminal receives configuration information and/or trigger information of the first uplink signal; or the first signal is a signal carried on the latest PRACH carrying Msgl in a cell corresponding to the first uplink signal before that the terminal sends the first uplink signal; or the first signal is a signal on a sending beam of a Physical Uplink Shared Channel (PUSCH), the PUSCH is a PUSCH carries Msg3 in a random access process.

Optionally, the first signal includes a signal carried on at least one PRACH, and the uplink beam indication information includes type information of the PRACH.

Optionally, the uplink beam indication information is carried by one or more of: Radio Resource Control (RRC) signaling; MAC Control Element (MAC-CE) signaling; Downlink Control Information (DCI) that triggers or schedules the first uplink signal.

Optionally, the DCI includes an uplink beam indication field that includes the uplink beam indication information.

Optionally, candidate indication content in the uplink beam indication information includes at least one of:
information on the PRACH used by the terminal to determine the sending beam of the first uplink signal;
information informing the terminal to use a sending beam of a default or predefined PRACH to determine the sending beam of the first uplink signal;
information informing the terminal to use a beam in a beam group corresponding to a sending beam of the PRACH to send the first uplink signal;
information informing the terminal to use the sending beam of the PRACH to send the first uplink signal;
information informing the terminal not to use the sending beam of the PRACH to determine the sending beam of the first uplink signal;
information informing the terminal to perform uplink sending beam scanning.

Optionally, the first uplink signal includes at least one of: SRS, Phase-Tracking Reference Signal (PTRS), Demodulation Reference Signal (DMRS), uplink signal transmitted in PUCCH, and uplink signal transmitted in PUSCH.

Optionally, the uplink beam indication information includes beam scanning indication information, and coding states of the beam scanning indication information at least include: a state for informing the terminal to perform global scanning of uplink sending beams; and a state for informing the terminal to perform local beam scanning of the sending beam of the first uplink signal based on a sending beam of the PRACH.

Optionally, the first signal is the signal carried on the PRACH, and the method further includes: receiving, by the base station, the first uplink signal by using a receiving beam corresponding to a sending beam of the PRACH.

In a second aspect, a signal transmission method is provided, which include:
receiving, by a terminal, uplink beam indication information, herein the uplink beam indication information indicates a first signal for determining a sending beam of a first uplink signal, and the first signal includes a signal carried on a PRACH; determining, by the terminal, the sending beam of the first uplink signal according to the uplink beam indication information; and sending, by the terminal, the first uplink signal by using the sending beam of the first uplink signal.

Optionally, the uplink beam indication information informs the terminal to use a sending beam of the PRACH as the sending beam of the first uplink signal.

Optionally, the first signal further includes at least one of: SRS, SSB, and CSI-RS.

Optionally, the uplink beam indication information includes indication information informing whether the terminal uses a sending beam of the PRACH to determine the sending beam of the first uplink signal.

Optionally, the uplink beam indication information includes indication information informing the terminal to use a sending beam in a sending beam group where a sending beam of the PRACH is located as the sending beam of the first uplink signal.

Optionally, the method further includes: receiving, by the terminal, beam group indication information sent by a base station or the uplink beam indication information includes beam group indication information, herein the beam group indication information indicates the sending beam group where the sending beam of the PRACH is located; and/or, receiving, by the terminal, beam indication information sent by a base station or the uplink beam indication information includes beam indication information, herein the beam indication information indicates beams in the sending beam group where the sending beam of the PRACH is located.

Optionally, the first signal is a signal carried on one or more PRACHs, and the uplink beam indication information includes information indicating the one or more PRACHs from a group of candidate PRACHs.

Optionally, the first signal is a signal carried on the latest PRACH carrying Msgl when the terminal initially accesses a cell where the first uplink signal is located; or the first signal is a signal carried on the latest PRACH carrying Msgl in a cell where the first uplink signal is located before that the terminal receives the uplink beam indication information; or the first signal is a signal carried on the latest PRACH carrying Msgl in a cell corresponding to the first uplink signal before that the terminal receives scheduling information of the first uplink signal; or the first signal is a signal carried on the latest PRACH carrying Msg1 in a cell corresponding to the first uplink signal before that the terminal receives configuration information and/or trigger information of the first uplink signal; or the first signal is a signal carried on the latest PRACH carrying Msgl in a cell corresponding to the first uplink signal before that the terminal sends the first uplink signal; or the first signal is a signal on a sending beam of a PUSCH, and the PUSCH is a PUSCH carries Msg3 in a random access process.

Optionally, the first signal includes a signal carried on at least one PRACH, and the uplink beam indication information includes type information of the PRACH.

Optionally, the uplink beam indication information is carried by one or more of: RRC signaling; MAC-CE signaling; DCI that triggers or schedules the first uplink signal.

Optionally, the DCI includes an uplink beam indication field that includes the uplink beam indication information.

Optionally, the uplink beam indication information includes at least one of:
information on the PRACH used by the terminal to determine the sending beam of the first uplink signal;
information informing the terminal to use a sending beam of a default or predefined PRACH to determine the sending beam of the first uplink signal;
information informing the terminal to use a beam in a beam group corresponding to a sending beam of the PRACH to send the first uplink signal;
information informing the terminal to use the sending beam of the PRACH to send the first uplink signal;
information informing the terminal not to use the sending beam of the PRACH to determine the sending beam of the first uplink signal;
information informing the terminal to perform uplink sending beam scanning.

Optionally, the first uplink signal includes at least one of: SRS, PTRS, DMRS, uplink signal transmitted in PUCCH, and uplink signal transmitted in PUSCH.

Optionally, the uplink beam indication information includes beam scanning indication information, and coding states of the beam scanning indication information at least include: a state for informing the terminal to perform global scanning of uplink sending beams; and a state for informing the terminal to perform local beam scanning of the sending beam of the first uplink signal based on a sending beam of the PRACH.

Optionally, if the uplink beam indication information contains second information for indicating a signal identifier or index of the first signal in addition to the beam scanning indication information, the terminal determines the sending beam of the first uplink signal according to the first signal; if the uplink beam indication information does not contain the second information, the terminal determines the sending beam of the first uplink signal according to the beam scanning indication information.

Optionally, sending, by the terminal, the first uplink signal by using the sending beam of the first uplink signal, includes: sending, by the terminal, the first uplink signal by using a spatial domain filtering same as a spatial domain filtering of the PRACH indicated by the uplink beam indication information.

In a third aspect, a beam determination method is provided, including: instructing, by a base station, a terminal to send a first uplink signal; and determining, by the base station, a receiving beam corresponding to a sending beam of a PRACH as a default receiving beam of the first uplink signal.

Optionally, the method further includes: receiving, by the base station, the first uplink signal by using a spatial domain filtering same as a spatial domain filtering for receiving the PRACH.

Optionally, the PRACH is the latest PRACH carrying Msgl when the terminal initially accesses a cell where the first uplink signal is located; or the PRACH is the latest PRACH carrying Msgl in a cell where the uplink signal is located before that the terminal receives the uplink beam indication information; or the PRACH is the latest PRACH carrying Msgl in a cell corresponding to the first uplink signal before that the terminal receives scheduling information of the first uplink signal; or the PRACH is the latest PRACH carrying Msgl in a cell corresponding to the first uplink signal before that the terminal receives configuration information and/or trigger information of the first uplink signal; or the PRACH is the latest PRACH carrying Msgl in a cell corresponding to the first uplink signal before that the terminal sends the first uplink signal; or the PRACH is a sending beam of a PUSCH, the PUSCH is a PUSCH carries Msg3 in a random access process.

Optionally, the first uplink signal includes at least one of: SRS, PTRS, DMRS, uplink signal transmitted in PUCCH, and uplink signal transmitted in PUSCH.

In a fourth aspect, a signal transmission method is provided, including: determining, by a terminal, a default sending beam of a first uplink signal according to a sending beam of a PRACH.

Optionally, the method further includes: sending, by the terminal, the first uplink signal by using the default sending beam when a first condition is met; herein the first condition is: a base station instructs the terminal to send the first uplink signal, and the terminal has established an RRC connection with the base station but has not received uplink beam indication information, herein the uplink beam indication information indicates a first signal for determining a sending beam of the first uplink signal, and the first signal includes a signal carried on the Physical Random Access Channel (PRACH).

Optionally, the determining, by a terminal, a default sending beam of a first uplink signal according to a sending beam of a PRACH, includes: determining, by the terminal, a sending beam of the PRACH as the default sending beam of the first uplink signal.

Optionally, the PRACH is the latest PRACH carrying Msgl when the terminal initially accesses a cell where the first uplink signal is located; or the PRACH is the latest PRACH carrying Msgl in a cell where the uplink signal is located before that the terminal receives uplink beam indication information; or the PRACH is the latest PRACH carrying Msgl in a cell corresponding to the first uplink signal before that the terminal receives scheduling information of the first uplink signal; or the PRACH is the latest PRACH carrying Msgl in a cell corresponding to the first uplink signal before that the terminal receives configuration information and/or trigger information of the first uplink signal; or the PRACH is the latest PRACH carrying Msgl in a cell corresponding to the first uplink signal before that the terminal sends the first uplink signal; or the PRACH is a sending beam of a PUSCH, the PUSCH is a PUSCH carries Msg3 in a random access process.

Optionally, the first uplink signal includes at least one of: SRS, PTRS, DMRS, uplink signal transmitted in PUCCH, and uplink signal transmitted in PUSCH.

In a fifth aspect, a base station is provided, including: a sending module configured to instruct a terminal to send a first uplink signal, and send uplink beam indication information to the terminal, herein the uplink beam indication information indicates a first signal for determining a sending beam of the first uplink signal, and the first signal includes a signal carried on a Physical Random Access Channel (PRACH).

In a sixth aspect, a terminal is provided, including: a receiving module configured to receive uplink beam indication information, herein the uplink beam indication information indicates a first signal for determining a sending beam of a first uplink signal, and the first signal includes a signal carried on a PRACH; a processing module configured to determine the sending beam of the first uplink signal according to the uplink beam indication information; and a sending module configured to send the first uplink signal by using the sending beam of the first uplink signal.

In a seventh aspect, a base station is provided, including: a sending module configured to instruct a terminal to send a first uplink signal; and a receiving module configured to determine a receiving beam corresponding to a sending beam of a PRACH as a default receiving beam of the first uplink signal.

In an eighth aspect, a terminal is provided, including: a processing module configured to determine a default sending beam of a first uplink signal according to a sending beam of a PRACH.

In a ninth aspect, a communication device is provided, including: a processor, a memory and a transceiver; the transceiver is configured to receive or send information under control of the processor; and the processor is configured to read computer instructions in the memory to perform the method described in any one of the first aspect described above.

In a tenth aspect, a communication device is provided, including: a processor, a memory and a transceiver; the transceiver is configured to receive or send information under control of the processor; and the processor is configured to read computer instructions in the memory to perform the method described in any one of the second aspect described above.

In an eleventh aspect, a communication device is provided, including: a processor, a memory and a transceiver; the transceiver is configured to receive or send information under control of the processor; and the processor is configured to read computer instructions in the memory to perform the method described in any one of the third aspect described above.

In a twelfth aspect, a communication device is provided, including: a processor, a memory and a transceiver; the transceiver is configured to receive or send information under control of the processor; and the processor is configured to read computer instructions in the memory to perform the method described in any one of the fourth aspect described above.

In a thirteenth aspect, a computer readable storage medium is provided, the computer readable storage medium stores computer executable instructions which are configured to cause the computer to perform the method described in any one of the first aspect described above.

In a fourteenth aspect, a computer readable storage medium is provided, the computer readable storage medium stores computer executable instructions which are configured to cause the computer to perform the method described in any one of the second aspect described above.

In a fifteenth aspect, a computer readable storage medium is provided, the computer readable storage medium stores computer executable instructions which are configured to cause the computer to perform the method described in any one of the third aspect described above.

In a sixteenth aspect, a computer readable storage medium is provided, the computer readable storage medium stores computer executable instructions which are configured to cause the computer to perform the method described in any one of the fourth aspect described above.

In the above embodiments of the application, the terminal can use the sending beam of the PRACH to determine the sending beam of the uplink signal and thus can use the sending beam of the uplink signal to send the uplink signal, and the base station can use the receiving beam corresponding to the sending beam of the PRACH to receive the uplink signal sent by the terminal, so that the sending beam of the uplink signal can be determined and the uplink signal can be sent based on this sending beam. Especially when the embodiments of the application are applied to the case where the correspondence between the uplink beam and the downlink beam is not established, the delay of determining the sending beam of the uplink signal can be reduced, thereby reducing the delay of uplink signal transmission, and improving the system efficiency and performance.

### Brief Description of the Drawings

Fig. 1 is a schematic diagram of a beam indication process implemented at the base station side provided by an embodiment of the application;
Fig. 2 is a schematic diagram of an uplink beam indication and uplink signal transmission process provided by an embodiment of the application;
Fig. 3 is a schematic diagram of a beam determination process implemented at the base station side provided by an embodiment of the application;
Fig. 4 is a schematic diagram of an uplink signal sending process implemented at the terminal side provided by an embodiment of the application;
Fig. 5 is a schematic diagram of beams in an embodiment of the application;
Fig. 6 is a structural schematic diagram of a base station provided by an embodiment of the application;
Fig. 7 is a structural schematic diagram of a terminal provided by an embodiment of the application;
Fig. 8 is a structural schematic diagram of a base station provided by another embodiment of the application;
Fig. 9 is a structural schematic diagram of a terminal provided by another embodiment of the application;
Fig. 10 is a structural schematic diagram of a communication device at the base station side provided by an embodiment of the application;
Fig. 11 is a structural schematic diagram of a communication device at the terminal side provided by an embodiment of the application;
Fig. 12 is a structural schematic diagram of another communication device at the base station side provided by an embodiment of the application;
Fig. 13 is a structural schematic diagram of another communication device at the terminal side provided by an embodiment of the application.

### Detailed Description of the Embodiments

In the following, some terms in the embodiments of the application are explained so as to facilitate the understanding of those skilled in the art.
(1) In the embodiments of the application, the nouns "network" and "system" are often used alternately, but those skilled in the art may understand the meaning thereof.
(2) The term "a plurality of" in the embodiments of the application refers to two or more, and other quantifiers are similar thereto.
(3) "and/or" describes the association relationship of the associated objects, and indicates that there may be three relationships, for example, A and/or B may represent: only A, both A and B, and only B. The character "/" generally indicates that the associated objects, before and after the character, have a kind of "or" relationship.

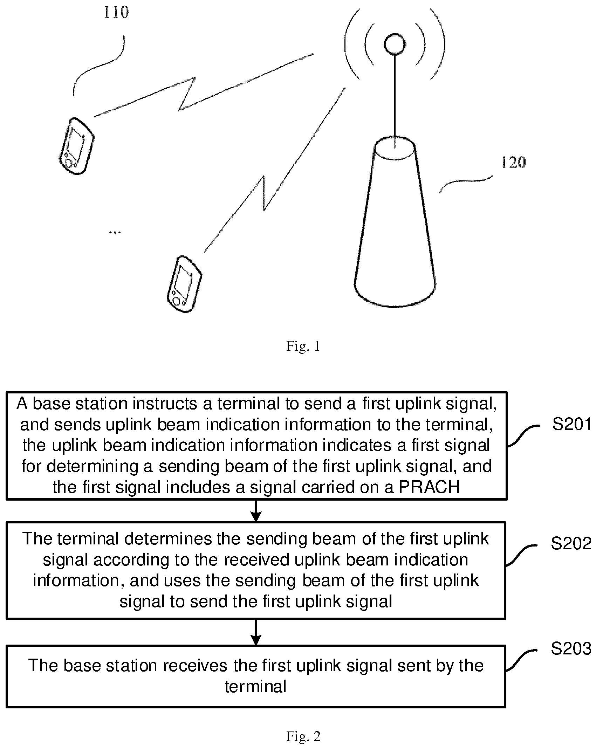

Referring to Fig. 1, it is a schematic diagram of a possible communication scenario provided by an embodiment of the application. As shown in Fig. 1, a terminal 110 accesses to a wireless network through a Radio Access Network (RAN) node 120, to obtain the services of an external network (e.g., Internet) through the wireless network or communicate with other terminals through the wireless network.

Here, the terminal is also called User Equipment (UE), Mobile Station (MS), Mobile Terminal (MT), etc., and is a device for providing the voice and/or data connectivity to the user, e.g., a handheld device with the wireless connection function, an in-vehicle device, etc. At present, some examples of the terminal are: mobile phone, tablet, laptop, palmtop computer, Mobile Internet Device (MID), wearable device, Virtual Reality (VR) device, Augmented Reality (AR) equipment, wireless terminal in the industrial control, wireless terminal in the self driving, wireless terminal in the remote medical surgery, and wireless terminal in the smart grid, wireless terminal in the transportation safety, wireless terminal in the smart city, wireless terminal in the smart home, etc.

The RAN is a part in the network that connects the terminal to the wireless network. The RAN node (or device) is a node (or device) in the radio access network, and may also be called base station. At present, some examples of the RAN node are: gNB, Transmission Reception Point (TRP), evolved Node B (eNB), Radio Network Controller (RNC), Node B (NB), Base Station Controller (BSC), Base Transceiver Station (BTS), home base station (for example, home evolved NodeB or Home Node B (HNB)), Base Band Unit (BBU), or Wireless Fidelity (Wifi) Access Point (AP), etc. Furthermore, in a network structure, the RAN may include a Centralized Unit (CU) node and a Distributed Unit (DU) node.

The above-mentioned communication architecture may be the 5th generation wireless systems (5G) system or its evolved system, or may be other Orthogonal Frequency Division Multiplexing (OFDM)-based systems, DFT-S-OFDM (DFT-Spread OFDM)-based systems, or systems that involve beamforming.

The network architectures described in embodiments of the application are intended to illustrate the technical solutions of the embodiments of the application more clearly, and do not constitute a limitation on the technical solutions provided in the embodiments of the application. As can be known by those ordinary skilled in the art, with the evolution of network architectures, the technical solutions provided in embodiments of the present application are also applicable to similar technical problems.

Embodiments of the application are described by taking the base station and terminal as examples.

Based on the foregoing communication system architecture, in the embodiments of the application, the base station can indicate the sending beam of the first uplink signal, for example, instruct the terminal to use the sending beam of the PRACH to determine the sending beam of the first uplink signal, so that the terminal can send the first uplink signal according to the indicated uplink beam, to reduce the delay of uplink signal transmission, improve the system efficiency and performance, and also improve the flexibility of beam indication.

For example, using the embodiments of the application, especially when the correspondence between the uplink beam and the downlink beam is not established, the base station can instruct the terminal to use the sending beam of the PRACH to determine the sending beam of the uplink signal, so that it is not necessary to not send the PUCCH until the base station performs the beam scanning on the Source Reference Signal (SRS) configured for the PUCCH and determines the uplink beam of the PUCCH according to the scanning result. Based on the embodiments of the application, when sending the PUSCH, the base station does not need to send the SRS for acquiring the PUSCH CSI and then determine the uplink sending beam of the PUSCH through the SRS resources indicated by the base station after completing the downlink receiving beam scanning and/or completing the uplink sending beam scanning through SRS for a terminal and after configuring the "SpatialRelationInfo" for the SRS resources for CSI acquisition of the PUSCH, but determines the sending beam of the PUSCH according to the sending beam of the PRACH, thereby reducing the delay of the PUSCH transmission process.

In embodiments of the application, the first uplink signal includes but not limited to at least one of: SRS, Phase-Tracking Reference Signal (PTRS), uplink Demodulation Reference Signal (DMRS), uplink signal transmitted in PUCCH, and uplink signal transmitted in PUSCH.

Here, the SRS may include: SRS for beam management, SRS for uplink CSI acquisition, SRS for antenna switching, and so on. Taking the current protocol of the 3rd Generation Partnership Project New Radio (3GPP NR) system as an example, the configuration method of the SRS resources for CSI acquisition of the codebook-based uplink transmission mode is: to configure the "usage" in the high-level parameter SRS-ResourceSet corresponding to the SRS resource set as 'codebook', so this SRS resource set is the SRS resource set corresponding to the CSI acquisition of the codebook-based uplink transmission mode. The configuration method of the SRS resources for CSI acquisition of the non-codebook uplink transmission mode is: to configure the "usage" in the high-level parameter SRS-ResourceSet corresponding to the SRS resource set as 'nonCodebook', so this SRS resource set is the SRS resource set corresponding to the CSI acquisition of the non-codebook uplink transmission mode.

For example, in the f20 version of R15 protocol of 3GPP NR system, if the RRC parameter "usage" of the SRS resource set where the SRS resource is located is configured as "beam management" (that is, configured as SRS for beam management), the parameter "SpatialRelationInfo" (spatial relation information) of the SRS resource set can be configured as PRACH, so that the terminal sends the SRS by using the sending beam of the PRACH. The "SpatialRelationInfo" of the SRS resources in the current protocol of the 3GPP NR system corresponds to the parameter SRS-SpatialRelationInfo in the high-level signaling SRS-Resource parameters in TS38.331. For the convenience of expression, the "SpatialRelationInfo" is used herein to represent the spatial related parameter information for indicating a signal or resource, including but not limited to: SRS-SpatialRelationInfo, PUCCH-SpatialRelationInfo, QCL-Info and other parameters with similar functions in the 3GPP NR protocol.

It should be noted that the PRACH in the embodiments of the application can be understood as a signal transmitted on the PRACH.

Embodiments of the application will be described below in detail with reference to the drawings.

Referring to Fig. 2, it is a schematic diagram of an uplink beam indication and uplink signal transmission process provided by an embodiment of the application. As shown, the process may include the following steps.

S201: a base station instructs a terminal to send a first uplink signal, and sends uplink beam indication information to the terminal.

Here, the uplink beam indication information is used to indicate a first signal for determining a sending beam of the first uplink signal, and the first signal includes a signal carried on a PRACH. If the first signal is the signal carried on the PRACH, the uplink beam indication information informs the terminal to use the sending beam of the PRACH to determine the sending beam of the first uplink signal.

Optionally, the candidate value of the first signal may also include an uplink reference signal or a downlink signal, such as at least one of SRS, SSB and CSI-RS. In other words, the PRACH, SRS, SSB and CSI-RS may be used as candidate first signals, and the base station may indicate one of these candidate first signals in the uplink beam indication information.

Optionally, the PRACH may be predefined or default.

Optionally, the first signal may also include a downlink signal.

Optionally, the uplink beam indication information may be included in the configuration information of the first uplink signal, for example, in the configuration information of the SRS resources. More specifically, the configuration information may be the configuration parameter "SpatialRelationInfo" (spatial relation information) of the SRS resource, which is used to indicate the sending beam of the SRS resource. In embodiments of the application, the parameter may be configured as at least one of PRACH, SRS, SSB and CSI-RS. When the parameter is configured as PRACH, it indicates that the first signal used to determine the sending beam of the first uplink signal is a signal carried on a PRACH, so that the terminal can use the sending beam of the PRACH to determine the sending beam of the first uplink signal; when the parameter is configured as SSB, it indicates that the first signal used to determine the sending beam of the first uplink signal is SSB, and the terminal can use the receiving beam of the SSB to determine the sending beam of the first uplink signal; when the parameter is configured as CSI-RS, it indicates that the first signal used to determine the sending beam of the first uplink signal is CSI-RS, and the terminal can use the receiving beam of the CSI-RS to determine the sending beam of the first uplink signal.

For example, some possible indication methods of SpatialRelationInfo may be: carrying an uplink beam indication information field in the DCI, where the states of the information field include: at least one coding state for indicating a PRACH index, or at least one coding state indicating that the terminal uses the default or predefined PRACH to send the uplink signal. Some other possible indication methods of SpatialRelationInfo may be: carrying an uplink beam indication information field in the DCI, where the coding state of the information field contains the index of the first signal used for the terminal to determine the sending beam of the first uplink signal, or the coding state of the information field contains an identifier (ID) of the first signal used for the terminal to determine the sending beam of the first uplink signal.

Optionally, the uplink beam indication information may also be in the scheduling information of the first uplink signal, for example, in the DCI that schedules the PUSCH. In a specific implementation, the information field of the traditional DCI can be extended, that is, the above-mentioned uplink beam indication information can be carried by the newly added information field.

It should be noted that the bearing modes of the uplink beam indication information listed above are only examples, and the embodiments of the application do not limit the bearing mode of the uplink beam indication information.

Optionally, the first signal may be indicated in the following manners. For example, the identifier (ID) of the first signal may be used for indication, or the index of the first signal may be used for indication, or the identifier (ID) of the sending beam of the first signal may be used for indication, or the index of the sending beam of the first signal is used for the indication. The above only exemplarily lists several indication modes of the first signal, which are not limited in the embodiments of the application.

S202: the terminal determines the sending beam of the first uplink signal according to the received uplink beam indication information, and uses the sending beam of the first uplink signal to send the first uplink signal.

For example, if the base station configures the first uplink signal resource for the terminal and the terminal receives the uplink beam indication information sent by the base station, where the uplink beam indication information indicates to the terminal that the first signal for determining the sending beam of the first uplink signal is the signal carried on the PRACH, then the terminal uses the sending beam of the PRACH to determine the sending beam of the first uplink signal when sending the first uplink signal. Further, if the terminal does not receive such uplink beam indication information, the terminal determines the sending beam of the first uplink signal in other way, e.g., determines the sending beam of the first uplink signal by means of global beam scanning.

Optionally, the terminal may send the first uplink signal by using the same spatial domain filtering as the spatial domain filtering of the PRACH indicated by the uplink beam indication information.

S203: the base station receives the first uplink signal sent by the terminal.

Optionally, according to the process shown in Fig. 2, in a possible scenario, if the base station configures the first uplink signal for the terminal, the terminal sends the uplink signal according to the configuration of the base station; in another possible scenario, the base station configures the first uplink signal for the terminal, and the terminal sends the first uplink signal according to the scheduling of the base station when the base station schedules the terminal to send the first uplink signal.

Optionally, the first signal is a signal carried on one or more PRACHs. The base station and the terminal can pre-appoint one or more PRACH signals. According to the process shown in Fig. 2, in a possible scenario, if the uplink beam indication information instructs the terminal to use the sending beam of the PRACH to determine the sending beam of the first uplink signal, the first signal is a signal carried on a pre-appointed PRACH, and the terminal uses the sending beam of the pre-appointed PRACH to determine the sending beam of the first uplink signal. As a possible way, the uplink beam indication information is 1 bit and contains two states, one state indicates that the terminal uses the sending beam of the PRACH to determine the sending beam of the first uplink signal, and the other state does not define how the terminal determines the sending beam of the first uplink signal. As a possible way, the uplink beam indication information is 1 bit and contains two states, one state indicates that the terminal uses the sending beam of the PRACH to determine the sending beam of the first uplink signal, and the other state indicates that the terminal does not use the sending beam of the PRACH to determine the sending beam of the first uplink signal.

Optionally, the pre-appointed PRACH is a PRACH predefined by a protocol, or the signal carried on the pre-appointed PRACH is indicated by the base station to the terminal.

Optionally, the specific indication manner for the base station to indicate a PRACH signal to the terminal may be: the base station indicates the identifier or index of the PRACH to the terminal, or the base station indicates the specific PRACH transmission corresponding to the PRACH identifier or index to the terminal.

Here, a possible implementation where the terminal uses the sending beam of the PRACH to determine the sending beam of the uplink signal is: the terminal sends the uplink signal by using the same spatial domain filter as the spatial domain filter for sending the PRACH.

Optionally, according to the process of Fig. 2, in some embodiments, when the first signal for determining the sending beam of the first uplink signal indicated by the uplink beam indication information sent by the base station in S201 is a signal carried on a PRACH, the uplink beam indication information informs the terminal to use the sending beam of the PRACH as the sending beam of the first uplink signal. That is to say, if the base station indicates that the first signal for determining the sending beam of the first uplink signal is a signal carried on a PRACH through the uplink beam indication information, it means that the terminal is informed to use the sending beam of the PRACH as the sending beam of the first uplink signal. Correspondingly, in S202, the terminal takes the sending beam of the PRACH as the sending beam of the first uplink signal. Correspondingly, in S203, the base station uses the receiving beam corresponding to the sending beam of the PRACH to receive the first uplink signal.

Optionally, according to the process shown in Fig. 2, in some embodiments, the uplink beam indication information sent by the base station in S201 includes the indication information informing the terminal to use a sending beam in a sending beam group where the sending beam of the PRACH is located as the sending beam of the first uplink signal. That is to say, if the base station indicates that the first signal for determining the sending beam of the first uplink signal is a signal carried on a PRACH through the uplink beam indication information, it means that the terminal is informed to use a sending beam in a sending beam group where the sending beam of the PRACH is located as the sending beam of the first uplink signal. Correspondingly, in S202, the terminal determines that the first sending beam of the uplink signal is a sending beam in the sending beam group where the sending beam of the PRACH is located. Optionally, the terminal sends the first uplink signal by using a sending beam in the sending beam group where the sending beam of the PRACH is located.

Optionally, if the uplink beam indication information informs the terminal to use a sending beam in the sending beam group where the sending beam of the PRACH is located as the sending beam of the first uplink signal, the base station may further send the beam group indication information to the terminal, where the beam group indication information indicates the sending beam group where the sending beam of the PRACH is located. The beam group indication information may be a part of the uplink beam indication information, or may be sent by the base station independently of the uplink beam indication information. The beam group indication information may be the identifier or index of the beam group, or other information capable of indicating the beam group, which is not limited in the embodiments of the application.

Optionally, if the uplink beam indication information informs the terminal to use a sending beam in the sending beam group where the sending beam of the PRACH is located as the sending beam of the first uplink signal, the base station may further send the beam indication information to the terminal, where the beam indication information indicates beam(s) in the sending beam group where the sending beam of the PRACH is located. The beam indication information may be a part of the uplink beam indication information, or may be sent by the base station independently of the uplink beam indication information. The beam indication information may be the identifier(s) or index(s) of beam(s), or other information capable of indicating the beam(s), which is not limited in the embodiments of the application.

Optionally, if the uplink beam indication information informs the terminal to use a sending beam in the sending beam group where the sending beam of the PRACH is located as the sending beam of the first uplink signal, the base station may further send the beam group indication information and the beam indication information to the terminal, where the beam group indication information indicates the sending beam group where the sending beam of the PRACH is located, and the beam indication information indicates beams in the sending beam group where the sending beam of the PRACH is located. The beam group indication information and the beam indication information may be a part of the uplink beam indication information, or may be sent by the base station independently of the uplink beam indication information.

Optionally, according to the process shown in Fig. 2, in some embodiments, the first signal is a signal carried on one or more PRACHs. The uplink beam indication information includes information indicating one or more PRACHs from a group of candidate PRACHs. That is to say, the base station can indicate one or more PRACHs selected from a group of candidate PRACHs through the uplink beam indication information, for example, the uplink indication information includes the identifier(s) or index(s) of the one or more PRACHs or other indication information that can indicate the PRACH(s). Therefore, the uplink beam indication information, on the one hand, indicates that the first signal used to determine the sending beam of the first uplink signal is a signal carried on a PRACH, and on the other hand, indicates which PRACH or PRACHs in the candidate PRACH group are specifically used. In implementations, the identifier(s) or index(s) of the PRACH(s) may be used as the uplink beam indication information or as a part of the uplink beam indication information.

Correspondingly, in S202, the terminal may determine a first sending beam of the uplink signal according to the PRACH indicated by the uplink beam indication information. Optionally, the terminal may determine the first sending beam of the uplink signal according to the spatial domain filter of the PRACH indicated by the uplink beam indication information. The terminal sends the first uplink signal by using the same spatial domain filter as the spatial domain filter of the PRACH indicated by the uplink beam indication information.

Optionally, according to the process shown in Fig. 2, in some embodiments, the first signal, for determining the sending beam of the first uplink signal, indicated by the uplink beam indication information sent by the base station in S201 may be a signal carried on one of the following PRACHs:
- the latest PRACH carrying Msgl when the terminal initially accesses a cell where the uplink signal is located;
- the latest PRACH carrying Msgl in a cell where the uplink signal is located before that the terminal receives the uplink beam indication information;
- the latest PRACH carrying Msg1 in a cell corresponding to the uplink signal before that the terminal receives the scheduling information of the uplink signal;
- the latest PRACH carrying Msg1 in a cell corresponding to the uplink signal before that the terminal receives the configuration information and/or trigger information of the uplink signal;
- the latest PRACH carrying Msgl in a cell corresponding to the uplink signal before that the terminal sends the uplink signal;
- sending beam of the PUSCH, the PUSCH is a PUSCH carries Msg3 in a random access process.

Here, the Msgl is a message sent by the terminal through the PRACH channel during the random access process, and this message carries the random access sequence of the terminal; and the Msg3 is a message sent by the terminal through the PUSCH channel during the random access process, and this message is used to request establishing an RRC connection with the base station.

Optionally, according to the process shown in Fig. 2, in some embodiments, the first signal is a signal carried on at least one PRACH. The uplink beam indication information sent by the base station in S201 includes the type information of the PRACH. That is to say, the base station, on the one hand, can indicate that the first signal used to determine the sending beam of the first uplink signal is a signal carried on a PRACH through the uplink beam indication information, and on the other hand, can also indicate the type of the PRACH through the uplink beam indication information. For example, the PRACH type is indicated by the PRACH type information (such as PRACH type identifier) contained in the uplink beam indication information. In implementations, the type information (such as type identifier) of the PRACH may be used as the uplink beam indication information or as a part of the uplink beam indication information.

Optionally, the PRACH indicated by the PRACH type information may include at least one of the following PRACHs:
- PRACH for initial random access;
- PRACH for beam failure recovery;
- PRACH for non-competitive random access;
- PRACH for competitive random access.

Optionally, according to the process shown in Figure 2, in some embodiments, in S201, the base station may carry the uplink beam indication information through one or more of: RRC signaling, MAC-CE signaling, DCI that triggers or schedules the uplink signal.

Taking RRC signaling as an example, in possible implementations, the uplink beam indication information multiplexes the parameters of the uplink beam indication information in the current protocol, such as the RRC signaling "SpatialRelationInfo" of the uplink signal about the sending beam (for example, in the NR system, for SRS resources, the SpatialRelationInfo is generally the RRC parameter "spatialRelationInfo"; for SRS resources in the SRS resource set of which the usage is configured as "nonCodebook", the SpatialRelationInfo can also be the RRC parameter "csi-RS" or "associatedCSI-RS"; for the PUCCH, the SpatialRelationInfo is generally the RRC parameter "PUCCH-SpatialRelationInfo"). In embodiments, the information for determining the sending beam of the uplink signal indicated by the SpatialRelationInfo may include one of the following indication information: CSI-RS, SSB, SRS, and PRACH.

Then taking DCI signaling as an example, the base station sends the uplink beam indication information of aperiodic SRS resources (for the convenience of subsequent description, the information is expressed as SpatialRelationInfo) to the terminal through the uplink beam indication information field of SRS resources in the DCI. A state of the uplink beam indication field of aperiodic SRS resources defines one sending beam or a group of sending beams corresponding to aperiodic SRS resources. For example, the sending beam indication field of aperiodic SRS resources contains 2 bits, the state 01 is used for triggering the SRS resource set 1, and the sending beam corresponding to SRS resources in the SRS resource set 1 is the same as the sending beam of PRACH. Similar to the above example of aperiodic SRS, the base station sends the uplink beam indication information of the PUSCH to the terminal through the uplink beam indication information field of the PUSCH in the DCI, and the specific example will not be repeated.

It should be noted that the uplink beam indication information may be one piece of information, or may include multiple parts (that is, may include multiple pieces of information). For example, the first part of the uplink beam indication information is used to instruct the terminal to use the sending beam of the PRACH as the sending beam of the uplink signal, and the second part of the uplink beam indication information is used to indicate a specific PRACH (for example, may be ID or index of the PRACH), the first part can be sent through RRC signaling, and the second part can be sent through DCI signaling.

Optionally, the above DCI used to carry the uplink beam indication information may include an uplink beam indication field that is used to carry the uplink beam indication information. In implementations, the above uplink beam indication information can be carried by extending the traditional DCI information field, i.e., carried in an added new DCI information field.

Optionally, according to the process shown in Fig. 2, in some embodiments, the uplink beam indication information sent by the base station in S201 may include at least one of:
- information on the PRACH used by the terminal to determine the sending beam of the uplink signal;
- information informing the terminal to use a sending beam of a default or predefined PRACH to determine the sending beam of the uplink signal;
- information informing the terminal to use a beam in a beam group corresponding to the sending beam of the PRACH to send the uplink signal;
- information informing the terminal to use the sending beam of the PRACH to send the uplink signal;
- information informing the terminal not to use the sending beam of the PRACH to determine the sending beam of the uplink signal;
- information informing the terminal to perform the uplink sending beam scanning.

Correspondingly, at the terminal side, in S202, the step in which the terminal determines the first sending beam of the first uplink signal according to the uplink beam indication information may include: the terminal determines the sending beam of the first uplink signal according to the PRACH indicated by the uplink beam indication information.

Optionally, the terminal may determine the sending beam of the first uplink signal according to the spatial domain filter of the PRACH indicated by the uplink beam indication information.

Optionally, the terminal may send the first uplink signal by using the same spatial domain filtering as the spatial domain filtering of the PRACH indicated by the uplink beam indication information.

Optionally, according to the process shown in Fig. 2, in some embodiments, the uplink beam indication information sent by the base station in S201 includes the indication information indicating whether the terminal uses the sending beam of the PRACH to determine the sending beam of the first uplink signal. Correspondingly, in S202, if the uplink beam indication information is the indication information informing the terminal to use the sending beam of the PRACH to determine the sending beam of the first uplink signal, then the terminal uses the sending beam of the PRACH to determine the sending beam of the first uplink signal according to the uplink beam indication information, and uses this sending beam to send the first uplink signal; if the uplink beam indication information is the indication information informing the terminal not to use the sending beam of the PRACH to determine the sending beam of the first uplink signal, then the terminal may determine the sending beam of the first uplink signal in another way, for example, determine the sending beam of the first uplink signal according to the sending beam of the first signal of a type other than PRACH.

Here, if the uplink beam indication information informs the terminal to use the sending beam of the PRACH as the sending beam of the first uplink signal, it can be understood that the uplink beam indication information indicates that the first signal used by the terminal to determine the sending beam of the first uplink signal is a signal carried on a PRACH. If the uplink beam indication information informs the terminal not to use the sending beam of the PRACH to determine the sending beam of the first uplink signal, it can be understood that the uplink beam indication information indicates that the first signal used by the terminal to determine the sending beam of the first uplink signal is the first signal carried on another type of channel than PRACH.

In implementations, the indication information indicating whether the terminal uses the sending beam of the PRACH to determine the sending beam of the first uplink signal may be 1-bit information. When the value of this bit information is 0, it represents the indication information that the sending beam of the PRACH is used to determine the sending beam of the first uplink signal; and when the value of this bit information is 1, it represents the indication information that the sending beam of the PRACH is not used to determine the sending beam of the first uplink signal, and vice versa.

Optionally, according to the process shown in Fig. 2, in some embodiments, the uplink beam indication information sent by the base station in S201 includes the beam scanning indication information, and coding states of the beam scanning indication information at least include: a state for informing the terminal to perform the global scanning of uplink sending beams, and a state for informing the terminal to perform local beam scanning of the sending beam of the first uplink signal based on a sending beam of the PRACH. A possible implementation is: the beam scanning indication information may be 1-bit information. The beam scanning indication information has two states: a state with the value of 0 and a state with the value of 1. When the value of this bit information is 1, it indicates that the terminal performs the global scanning of uplink sending beams to determine the sending beam of the first uplink signal; and when the value of this bit information is 0, it indicates that the terminal to perform the local beam scanning of the sending beam of the first uplink signal based on the sending beam of the PRACH, and vice versa.

Correspondingly, in S202, if the coding state of the beam scanning indication information is a state that instructs the terminal to perform the local beam scanning of the sending beam of the first uplink signal based on the sending beam of the PRACH , the terminal uses the sending beam of the PRACH to determine the sending beam of the first uplink signal and uses the sending beam to send the first uplink signal; if the coding state of the beam scan indication information is a state that instructs the terminal to perform the global scanning of uplink sending beams, the terminal performs the global scanning of uplink sending beams.

Optionally, in a possible implementation, if the uplink beam indication information contains the second information for indicating a signal identifier or index of the first signal in addition to the beam scanning indication information, the terminal determines the sending beam of the first uplink signal according to the first signal. If the uplink beam indication information does not contain the second information but contains the beam scanning indication information, the terminal determines the sending beam of the first uplink signal according to the beam scanning indication information.

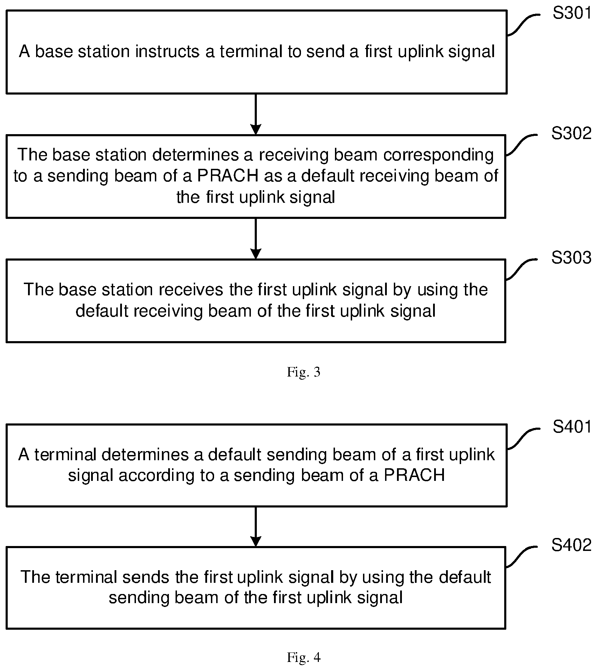

Referring to Fig. 3, it is a beam determination process provided by another embodiment of the application. As shown, the process may include the following steps.

S301: a base station instructs a terminal to send a first uplink signal.

S302: the base station determines a receiving beam corresponding to a sending beam of a PRACH as a default receiving beam of the first uplink signal.

Further, the process may also include the following steps.

S303: the base station receives the first uplink signal by using the receiving beam of the first uplink signal.

Specifically the base station receives the first uplink signal by using the same spatial domain filtering as the spatial domain filtering for receiving the PRACH.

Optionally, according to the process shown in Fig. 3, in a possible scenario, if the base station configures the uplink signal for the terminal, the terminal sends the uplink signal according to the configuration of the base station; in another possible scenario, the base station configures the uplink signal for the terminal, and the terminal sends the uplink signal according to the scheduling of the base station when the base station schedules the terminal to send the uplink signal.

Optionally, according to the process shown in Fig. 3, in some embodiments, the base station takes a beam in a beam group where the sending beam of the PRACH is located as the default sending beam of the uplink signal.

Optionally, according to the process shown in Fig. 3, in some embodiments, the PRACH may be one of the following PRACHs:
- the latest PRACH carrying Msgl when the terminal initially accesses a cell where the first uplink signal is located;
- the latest PRACH carrying Msgl in a cell where the uplink signal is located before that the terminal receives the uplink beam indication information;
- the latest PRACH carrying Msgl in a cell corresponding to the first uplink signal before that the terminal receives the scheduling information of the first uplink signal;
- the latest PRACH carrying Msgl in a cell corresponding to the first uplink signal before that the terminal receives the configuration information and/or trigger information of the first uplink signal;
- the latest PRACH carrying Msgl in a cell corresponding to the first uplink signal before that the terminal sends the first uplink signal;
- the PRACH is a sending beam of a PUSCH, the PUSCH is a PUSCH carries Msg3 in a random access process.

Here, the Msgl is a message sent by the terminal through the PRACH channel during the random access process, and this message carries the random access sequence of the terminal; and the Msg3 is a message sent by the terminal through the PUSCH channel during the random access process, and this message is used to request establishing an RRC connection with the base station.

Optionally, the type of the PRACH may include at least one of the following types:
- PRACH for initial random access;
- PRACH for beam failure recovery;
- PRACH for non-competitive random access;
- PRACH for competitive random access.

Referring to Fig. 4, it is an uplink signal transmission process provided by another embodiment of the application. As shown, the process may include the following steps.

S401: a terminal determines a default sending beam of a first uplink signal according to a sending beam of a PRACH.

S402: the terminal sends the first uplink signal by using the default sending beam of the first uplink signal.

Optionally, according to the process shown in Fig. 4, in some embodiments, in S402, the terminal sends the first uplink signal by using the default sending beam when a first condition is met. The first condition is: the base station instructs the terminal to send the first uplink signal, and the terminal has established an RRC connection with the base station but has not received the uplink beam indication information.

Optionally, according to the process shown in Fig. 4, in some embodiments, in S401, the terminal takes the sending beam of the PRACH as the default sending beam of the first uplink signal.

Optionally, according to the process shown in Fig. 4, in some embodiments, in S401, the terminal takes a beam in a beam group where the sending beam of the PRACH is located as the default sending beam of the uplink signal.

Optionally, according to the process shown in Fig. 4, in some embodiments, the PRACH may be one of the following PRACHs:
- the latest PRACH carrying Msgl when the terminal initially accesses a cell where the first uplink signal is located;
- the latest PRACH carrying Msg1 in a cell where the uplink signal is located before that the terminal receives the uplink beam indication information;
- the latest PRACH carrying Msgl in a cell corresponding to the first uplink signal before that the terminal receives the scheduling information of the first uplink signal;
- the latest PRACH carrying Msgl in a cell corresponding to the first uplink signal before that the terminal receives the configuration information and/or trigger information of the first uplink signal;
- the latest PRACH carrying Msgl in a cell corresponding to the first uplink signal before that the terminal sends the first uplink signal;
- the PRACH is a sending beam of a PUSCH, the PUSCH is a PUSCH carries Msg3 in a random access process.

Here, the Msgl is a message sent by the terminal through the PRACH channel during the random access process, and this message carries the random access sequence of the terminal; and the Msg3 is a message sent by the terminal through the PUSCH channel during the random access process, and this message is used to request establishing an RRC connection with the base station.

Optionally, the type of the PRACH may include at least one of the following types:
- PRACH for initial random access;
- PRACH for beam failure recovery;
- PRACH for non-competitive random access;
- PRACH for competitive random access.

Based on one embodiment or a combination of multiple embodiments described above, in a possible scenario, the uplink beam indication information sent by the base station informs the terminal that the first signal for determining the sending beam of the SRS is a signal carried on a PRACH, and then the terminal uses a group of beams corresponding to the sending beam of the default PRACH or the predefined PRACH as the sending beams of the SRS for uplink sending beam scanning according to the received uplink beam indication information when sending the SRS, the beam group corresponding to the sending beam of the PRACH may be determined by the terminal based on a predefined criterion.

Optionally, the above scenario can be applied when the SRS resources are configured as the SRS resources for beam scanning. For example, in the f20 version of R15 protocol of 3GPP NR system, the RRC parameter "usage" of an SRS resource set where the SRS resources are located is configured as "beam management".

Based on one embodiment or a combination of multiple embodiments described above, in another possible scenario, the base station sends the signaling to the terminal to instruct the terminal whether to use beams in the beam group corresponding to the sending beam of the PRACH to send the SRS so as to perform the beam scanning. One or more coding states of the signaling indicate that the terminal uses the beams in the beam group corresponding to the sending beam of the PRACH to send the SRS (i.e., local beam scanning), and the other one or more coding states indicate that the terminal can use all the available uplink sending beams to send the SRS and perform the sending beam scanning (i.e., global beam scanning). The terminal receives the signaling, and sends the uplink signal in the beam scanning manner indicated by the state of the signaling to realize the beam scanning.

Optionally, the signaling is RRC signaling or L1 signaling, for example, signaling included in the DCI. If the signaling is the signaling included in the DCI, it may correspond to an information field in the DCI to carry the signaling.

Optionally, the above scenario can be applied when the SRS resources are configured as the SRS resources for beam scanning. For example, in the f20 version of R15 protocol of 3GPP NR system, the RRC parameter "usage" of an SRS resource set where the SRS resources are located is configured as "beam management".

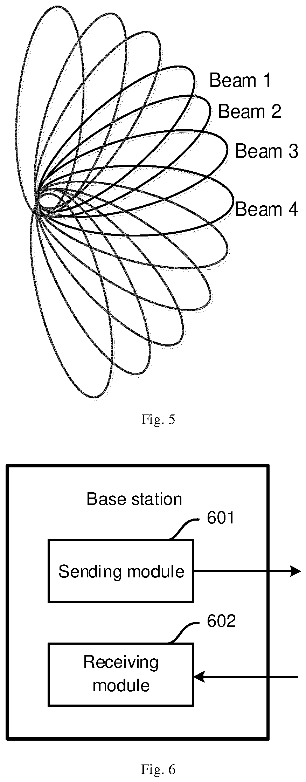

Based on one embodiment or a combination of multiple embodiments described above, in another possible scenario, a schematic diagram is shown in Fig. 5. The terminal has a total of 12 sending beams as follows. If the uplink beam indication information sent by the base station instructs the terminal to use beams in the beam group corresponding to the sending beam of the PRACH to send the SRS, the terminal uses the beams 1 to 4 to send the SRS because the beams 1 to 4 belong to the beam group corresponding to the sending beam of the PRACH; if the base station does not instruct the terminal to use beams in the beam group corresponding to the sending beam of the PRACH to send the SRS through the uplink beam indication information, or the base station has sent the uplink beam indication information but the uplink beam indication information does not instruct the terminal to use beams in the beam group corresponding to the sending beam of the PRACH to send the SRS, the terminal uses all the beams to send the SRS.

Still taking Fig. 5 as an example, the terminal has a total of 12 sending beams as follows. When the uplink beam indication information sent by the base station instructs the terminal to use beams in the beam group corresponding to the sending beam of a certain PRACH to send the SRS, the terminal uses the beams 1 to 4 to send the SRS because the beams 1 to 4 belong to the beam group corresponding to the sending beam of the PRACH. When the uplink beam indication information sent by the base station instructs the terminal to use beams in the beam group corresponding to the sending beam of another PRACH to send the SRS, the terminal uses the other several beams corresponding to the PRACH to send the SRS.

Based on one embodiment or a combination of multiple embodiments described above, the uplink beam indication information is contained in the spatialRelationInfo in the high-level parameter SRS-Resource of the SRS resource configuration, the spatialRelationInfo may be:

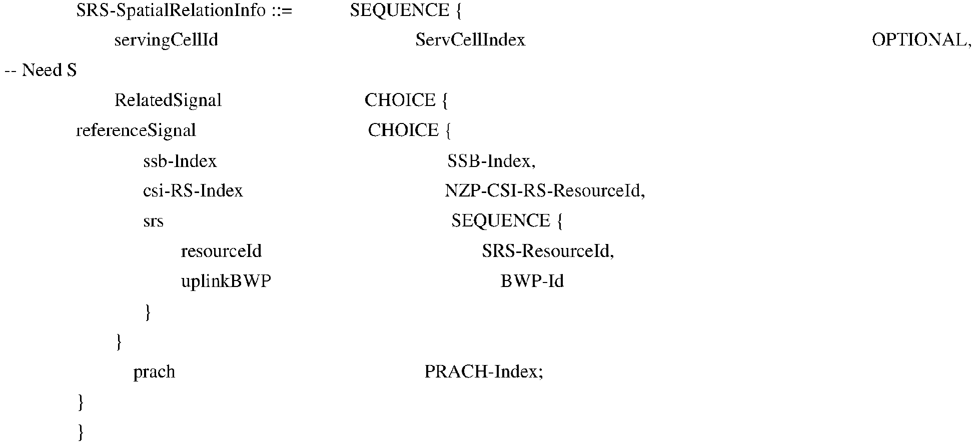

The fields "referenceSignal" and "prach" are used to configure the first signal (signal candidates include SSB, CSI-RS, SRS and PRACH), the referenceSignal and prach can only indicate one of them. The "PRACH-Index" indicated by the field "prach" may be used to indicate the PRACH used by the terminal to determine the sending beam of the first uplink signal.

Another possibility of the spatialRelationInfo is:

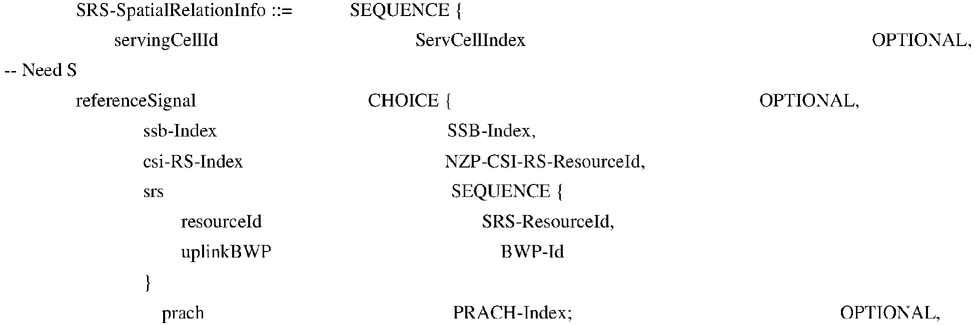

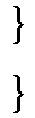

The field "referenceSignal" is used for the first signal (that is, the candidates of the first signal include SSB, CSI-RS, SRS and PRACH). The "PRACH-Index" indicated by the field "prach" may be used to indicate the PRACH used by the terminal to determine the sending beam of the first uplink signal.

Another possibility of the spatialRelationInfo is:

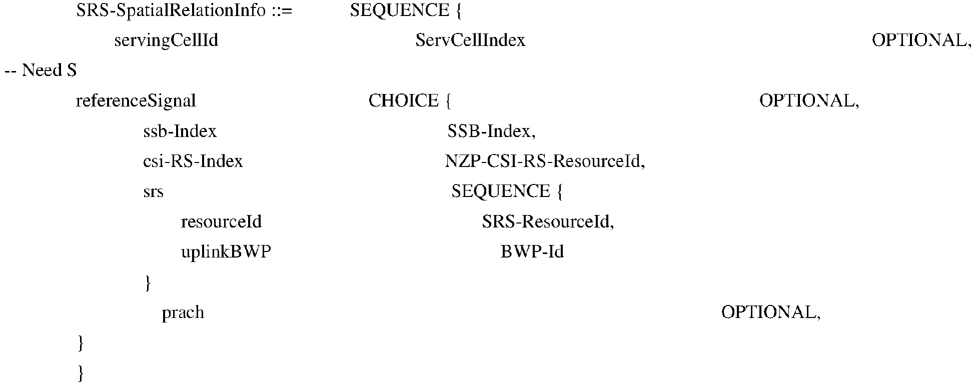

The fields "referenceSignal" and "prach" are used to configure the first signal (signal candidates include SSB, CSI-RS, SRS and PRACH), the referenceSignal and prach can only configure one of them. If the field "prach" exists, it means that the terminal uses the sending beam of the PRACH to determine the sending beam of the first uplink signal. The PRACH for determining the sending beam of the first signal may be a predefined PRACH.

Based on the same technical concept, embodiments of the application further provide a base station, which can implement the functions of the base station side in the process shown in Fig. 2.

Referring to Fig. 6, which is a structural schematic diagram of a base station provided by an embodiment of the application, the base station may include a sending module 601, and further, may also include a receiving module 602.

The sending module 601 is configured to instruct a terminal to send a first uplink signal, and send the uplink beam indication information to the terminal, the uplink beam indication information indicates a first signal for determining a sending beam of the first uplink signal, and the first signal includes a signal carried on a PRACH.

Optionally, the uplink beam indication information indicates the terminal to use a sending beam of the PRACH to determine the sending beam of the first uplink signal.

Optionally, the first signal further includes at least one of: SRS, SSB, and CSI-RS.

Optionally, the uplink beam indication information includes indication information indicating whether the terminal uses a sending beam of the PRACH to determine the sending beam of the first uplink signal.

Optionally, the uplink beam indication information includes indication information informing the terminal to use a sending beam in a sending beam group where a sending beam of the PRACH is located as the sending beam of the first uplink signal.

Optionally, the sending module 601 is further configured to: send the beam group indication information to the terminal or the uplink beam indication information includes the beam group indication information, herein the beam group indication information indicates the sending beam group where the sending beam of the PRACH is located; and/or, send the beam indication information to the terminal or the uplink beam indication information includes the beam indication information, herein the beam indication information is used to indicate beams in the sending beam group where the sending beam of the PRACH is located.

Optionally, the first signal is a signal carried on one or more PRACHs, and the uplink beam indication information includes information indicating the one or more PRACHs from a group of candidate PRACHs.

Optionally, the first signal is a signal carried on the latest PRACH carrying Msgl when the terminal initially accesses a cell where the first uplink signal is located; or
the first signal is a signal carried on the latest PRACH carrying Msgl in a cell where the first uplink signal is located before that the terminal receives the uplink beam indication information; or
the first signal is a signal carried on the latest PRACH carrying Msgl in a cell corresponding to the first uplink signal before that the terminal receives the scheduling information of the first uplink signal; or
the first signal is a signal carried on the latest PRACH carrying Msgl in a cell corresponding to the first uplink signal before that the terminal receives the configuration information and/or trigger information of the first uplink signal; or
the first signal is a signal carried on the latest PRACH carrying Msgl in a cell corresponding to the first uplink signal before that the terminal sends the first uplink signal; or
the first signal is a signal on a sending beam of a Physical Uplink Shared Channel, PUSCH, the PUSCH is a PUSCH carries Msg3 in a random access process.

Optionally, the first signal is a signal carried on at least one PRACH, and the uplink beam indication information includes type information of the PRACH.

Optionally, the uplink beam indication information is carried by one or more of:
RRC signaling;
MAC-CE signaling;
DCI that triggers or schedules the first uplink signal.

Optionally, the DCI includes an uplink beam indication field that includes the uplink beam indication information.

Optionally, the uplink beam indication information includes at least one of:
information on the PRACH used by the terminal to determine the sending beam of the first uplink signal;
information informing the terminal to use a sending beam of a default or predefined PRACH to determine the sending beam of the first uplink signal;
information informing the terminal to use a beam in a beam group corresponding to the sending beam of the PRACH to send the first uplink signal;
information informing the terminal to use the sending beam of the PRACH to send the first uplink signal;
information informing the terminal not to use the sending beam of the PRACH to determine the sending beam of the first uplink signal;
information informing the terminal to perform uplink sending beam scanning.

Optionally, the first uplink signal includes at least one of: SRS, PTRS, DMRS, uplink signal transmitted in PUCCH, and uplink signal transmitted in PUSCH.

Optionally, the uplink beam indication information includes beam scanning indication information, and coding states of the beam scanning indication information at least include:
a state for informing the terminal to perform global scanning of uplink sending beams;
a state for informing the terminal to perform local beam scanning of the sending beam of the first uplink signal based on a sending beam of the PRACH.

Optionally, the first signal is a signal carried on a PRACH, and the receiving module 602 is configured to receive the first uplink signal by using a receiving beam corresponding to a sending beam of the PRACH.

Based on the same technical concept, embodiments of the present application further provide a terminal, which can implement the functions of the terminal side in the process shown in Fig. 2.

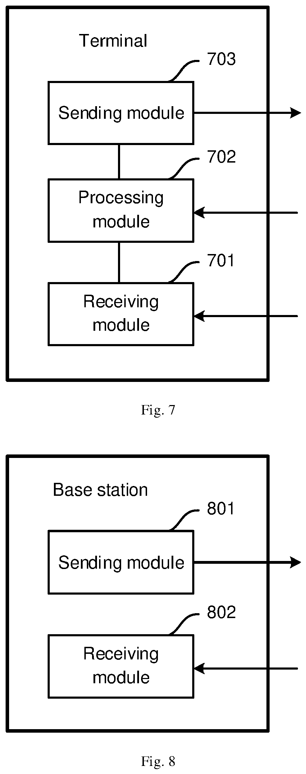

Referring to Fig. 7, which is a structural schematic diagram of a terminal provided by an embodiment of the application, the terminal may include: a receiving module 701, a processing module 702, and a sending module 703.

The receiving module 701 is configured to receive the uplink beam indication information, the uplink beam indication information indicates a first signal for determining a sending beam of a first uplink signal, and the first signal includes a signal carried on a PRACH; the processing module 702 is configured to determine the sending beam of the first uplink signal according to the uplink beam indication information; and the sending module 703 is configured to send the first uplink signal by using the sending beam of the first uplink signal.

Optionally, if the uplink beam indication information contains second information for indicating a signal identifier or index of the first signal in addition to the beam scanning indication information, the processing module 702 determines the sending beam of the first uplink signal according to the first signal; if the uplink beam indication information does not contain the second information, the processing module 702 determines the sending beam of the first uplink signal according to the beam scanning indication information. Optionally, the uplink beam indication information informs the terminal to use a sending beam of the PRACH to determine the sending beam of the first uplink signal.

Optionally, the first signal further includes at least one of: SRS, SSB, and CSI-RS.

Optionally, the uplink beam indication information includes indication information indicating whether the terminal uses a sending beam of the PRACH to determine the sending beam of the first uplink signal.

Optionally, the uplink beam indication information includes indication information informing the terminal to use a sending beam in a sending beam group where a sending beam of the PRACH is located as the sending beam of the first uplink signal.

Optionally, the receiving module 701 is further configured to: receive the beam group indication information sent by the base station or the uplink beam indication information includes the beam group indication information, herein the beam group indication information indicates the sending beam group where the sending beam of the PRACH is located; and/or, receive the beam indication information sent by the base station or the uplink beam indication information includes the beam indication information, herein the beam indication information indicates beams in the sending beam group where the sending beam of the PRACH is located.

Optionally, the first signal is a signal carried on one or more PRACHs, and the uplink beam indication information includes information indicating the one or more PRACHs from a group of candidate PRACHs.

Optionally, the first signal is a signal carried on the latest PRACH carrying Msgl when the terminal initially accesses a cell where the first uplink signal is located; or the first signal is a signal carried on the latest PRACH carrying Msgl in a cell where the first uplink signal is located before that the terminal receives the uplink beam indication information; or the first signal is a signal carried on the latest PRACH carrying Msgl in a cell corresponding to the first uplink signal before that the terminal receives the scheduling information of the first uplink signal; or the first signal is a signal carried on the latest PRACH carrying Msgl in a cell corresponding to the first uplink signal before that the terminal receives the configuration information and/or trigger information of the first uplink signal; or the first signal is a signal carried on the latest PRACH carrying Msg1 in a cell corresponding to the first uplink signal before that the terminal sends the first uplink signal; or the first signal is a signal on a sending beam of a Physical Uplink Shared Channel (PUSCH), the PUSCH is a PUSCH carries Msg3 in a random access process.

Optionally, the first signal is a signal carried on at least one PRACH, and the uplink beam indication information includes type information of the PRACH.

Optionally, the uplink beam indication information is carried by one or more of: RRC signaling; MAC-CE signaling; DCI that triggers or schedules the first uplink signal.

Optionally, the DCI includes an uplink beam indication field that includes the uplink beam indication information.

Optionally, the uplink beam indication information includes at least one of:
information on the PRACH used by the terminal to determine the sending beam of the first uplink signal;
information informing the terminal to use a sending beam of a default or predefined PRACH to determine the sending beam of the first uplink signal;
information informing the terminal to use a beam in a beam group corresponding to the sending beam of the PRACH to send the first uplink signal;
information informing the terminal to use the sending beam of the PRACH to send the first uplink signal;
information informing the terminal not to use the sending beam of the PRACH to determine the sending beam of the first uplink signal;
information informing the terminal to perform uplink sending beam scanning.

Optionally, the first uplink signal includes at least one of: SRS, PTRS, DMRS, uplink signal transmitted in PUCCH, and uplink signal transmitted in PUSCH.

Optionally, the uplink beam indication information includes beam scanning indication information, and coding states of the beam scanning indication information at least include: a state for informing the terminal to perform global scanning of uplink sending beams; and a state for informing the terminal to perform local beam scanning of the sending beam of the first uplink signal based on a sending beam of the PRACH.

Optionally, if the uplink beam indication information contains the second information for indicating a signal identifier or index of the first signal in addition to the beam scanning indication information, the processing module 702 is configured to determine the sending beam of the first uplink signal according to the first signal;
if the uplink beam indication information does not contain the second information, the processing module 702 is configured to determine the sending beam of the first uplink signal according to the beam scanning indication information.

Optionally, the sending module 703 is specifically configured to: send the first uplink signal by using the same spatial domain filtering as the spatial domain filtering of the PRACH indicated by the uplink beam indication information.

Based on the same technical concept, embodiments of the application further provide a base station, which can implement the functions of the base station side in the process shown in Fig. 3.

Referring to Fig. 8, it is a structural schematic diagram of a base station provided by an embodiment of the application. The base station may include: a sending module 801 and a receiving module 802.

The sending module 801 is configured to instruct a terminal to send a first uplink signal; and the receiving module 802 is configured to take a receiving beam corresponding to a sending beam of a PRACH as a default receiving beam of the first uplink signal.

Optionally, the receiving module 802 is further configured to: receive the first uplink signal by using the same spatial domain filtering as the spatial domain filtering for receiving the PRACH.

Optionally, the PRACH is the latest PRACH carrying Msgl when the terminal initially accesses a cell where the first uplink signal is located; or the PRACH is the latest PRACH carrying Msgl in a cell where the uplink signal is located before that the terminal receives the uplink beam indication information; or the PRACH is the latest PRACH carrying Msgl in a cell corresponding to the first uplink signal before that the terminal receives the scheduling information of the first uplink signal; or the PRACH is the latest PRACH carrying Msgl in a cell corresponding to the first uplink signal before that the terminal receives the configuration information and/or trigger information of the first uplink signal; or the PRACH is the latest PRACH carrying Msgl in a cell corresponding to the first uplink signal before that the terminal sends the first uplink signal; or the PRACH is a sending beam of a PUSCH, the PUSCH is a PUSCH carries Msg3 in a random access process.

Optionally, the first uplink signal includes at least one of: SRS, PTRS, DMRS, uplink signal transmitted in PUCCH, and uplink signal transmitted in PUSCH.

Based on the same technical concept, embodiments of present application further provide a terminal, which can implement the functions of the terminal side in the process shown in Fig. 4.

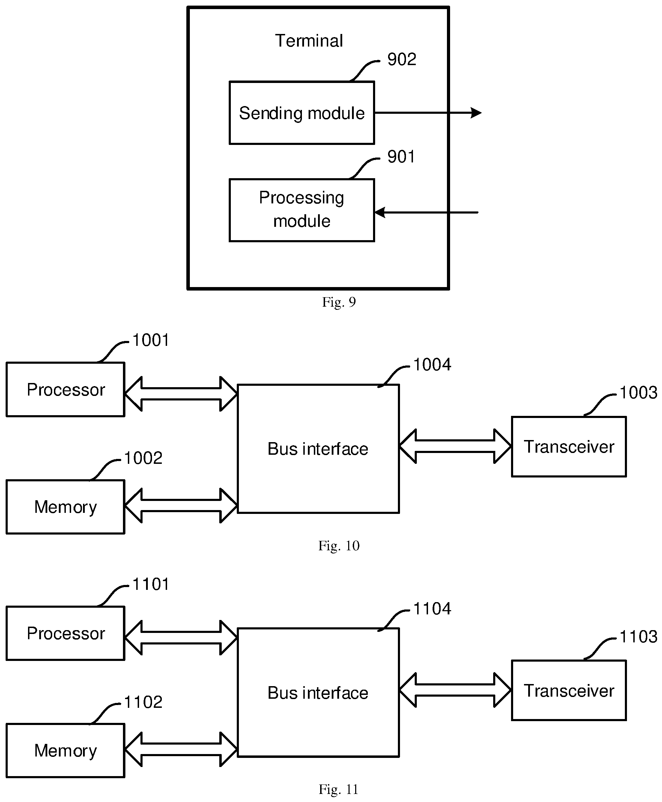

Referring to Fig. 9, which is a structure of a terminal provided by an embodiment of the application, the terminal may include: a processing module 901, and further, may also include a sending module 902.

The processing module 901 is configured to determine a default sending beam of a first uplink signal according to a sending beam of a PRACH.

Optionally, the sending module 902 is configured to send the first uplink signal by using the default sending beam when a first condition is met; the first condition is: a base station instructs the terminal to send the first uplink signal, and the terminal has established an RRC connection with the base station but has not received uplink beam indication information, the uplink beam indication information indicates a first signal for determining a sending beam of the first uplink signal, and the first signal includes a signal carried on the Physical Random Access Channel (PRACH).

Optionally, the processing module 901 is configured to: take the sending beam of the PRACH as the default sending beam of the first uplink signal.

Optionally, the PRACH is the latest PRACH carrying Msgl when the terminal initially accesses a cell where the first uplink signal is located; or the PRACH is the latest PRACH carrying Msgl in a cell where the uplink signal is located before that the terminal receives the uplink beam indication information; or the PRACH is the latest PRACH carrying Msgl in a cell corresponding to the first uplink signal before that the terminal receives the scheduling information of the first uplink signal; or the PRACH is the latest PRACH carrying Msgl in a cell corresponding to the first uplink signal before that the terminal receives the configuration information and/or trigger information of the first uplink signal; or the PRACH is the latest PRACH carrying Msgl in a cell corresponding to the first uplink signal before that the terminal sends the first uplink signal; or the PRACH is a sending beam of a PUSCH, the PUSCH is a PUSCH carries Msg3 in a random access process.

Optionally, the first uplink signal includes at least one of: SRS, PTRS, DMRS, uplink signal transmitted in PUCCH, and uplink signal transmitted in PUSCH.

Based on the same technical concept, embodiments of the application further provide a communication device, which may be a base station and can implement the functions implemented at the base station side in the process as shown in Fig. 2 in the embodiments of the application.

Referring to Fig. 10, it is a structural schematic diagram of a communication device provided by an embodiment of the application. As shown, the communication device may include: a processor 1001, a memory 1002, a transceiver 1003, and a bus interface 1004.

The processor 1001 is responsible for managing the bus architecture and general processing, and the memory 1002 may store the data used by the processor 1001 when performing the operations. The transceiver 1003 is configured to receive and send the data under the control of the processor 1001.

The bus architecture may include any numbers of interconnected buses and bridges, and link various circuits of one or more processors represented by the processor 1001 and the memory represented by the memory 1002. The bus architecture may further link various other circuits such as peripheral device, voltage regulator and power management circuit, which are all well known in the art and thus will not be further described again herein. The bus interface provides an interface. The processor 1001 is responsible for managing the bus architecture and general processing, and the memory 1002 may store the data used by the processor 1001 when performing the operations.

The procedure disclosed by embodiments of the application may be applied in the processor 1001 or implemented by the processor 1001. In the implementation process, each step of the signal processing flow may be completed by the integrated logic circuit of hardware or the instruction in the form of software in the processor 1001. The processor 1001 may be a general-purpose processor, a digital signal processor, an application specific integrated circuit, a field programmable gate array or other programmable logic device, a discrete gate or transistor logic device, or a discrete hardware component, and may implement or perform each method, step and logical block diagram disclosed in the embodiments of the application. The general-purpose processor may be a microprocessor or any conventional processor or the like. The steps of the method disclosed in combination with the embodiments of the application may be directly completed by a hardware processor, or completed by a combination of hardware and software modules in the processor. The software modules may be located in the random access memory, flash memory, read only memory, programmable read only memory or electrically erasable programmable read only memory, register and other mature storage medium in the art. The storage medium is located in the memory 1002, and the processor 1001 reads the information in the memory 1002 and completes the steps of the signal processing flow in combination with its hardware.

Specifically, the processor 1001 is configured to read computer instructions in the memory 1002 and perform the following process:
instructing a terminal to send a first uplink signal, and sending the uplink beam indication information to the terminal, herein the uplink beam indication information indicates a first signal for determining a sending beam of the first uplink signal, and the first signal includes a signal carried on a Physical Random Access Channel (PRACH).

Optionally, the uplink beam indication information informs the terminal to use a sending beam of the PRACH to determine the sending beam of the first uplink signal.

Optionally, the first signal further includes at least one of: SRS, SSB, and CSI-RS.

Optionally, the uplink beam indication information includes indication information indicating whether the terminal uses a sending beam of the PRACH to determine the sending beam of the first uplink signal.

Optionally, the uplink beam indication information includes indication information informing the terminal to use a sending beam in a sending beam group where a sending beam of the PRACH is located as the sending beam of the first uplink signal.

Optionally, the processor 1001 is further configured to: send the beam group indication information to the terminal or the uplink beam indication information includes the beam group indication information, herein the beam group indication information indicates the sending beam group where the sending beam of the PRACH is located; and/or, send the beam indication information to the terminal or the uplink beam indication information includes the beam indication information, herein the beam indication information indicates beams in the sending beam group where the sending beam of the PRACH is located.

Optionally, the first signal is a signal carried on one or more PRACHs, and the uplink beam indication information includes information indicating the one or more PRACHs from a group of candidate PRACHs.

Optionally, the first signal is a signal carried on the latest PRACH carrying Msgl when the terminal initially accesses a cell where the first uplink signal is located; or
the first signal is a signal carried on the latest PRACH carrying Msgl in a cell where the first uplink signal is located before that the terminal receives the uplink beam indication information; or
the first signal is a signal carried on the latest PRACH carrying Msgl in a cell corresponding to the first uplink signal before that the terminal receives the scheduling information of the first uplink signal; or
the first signal is a signal carried on the latest PRACH carrying Msgl in a cell corresponding to the first uplink signal before that the terminal receives the configuration information and/or trigger information of the first uplink signal; or
the first signal is a signal carried on the latest PRACH carrying Msgl in a cell corresponding to the first uplink signal before that the terminal sends the first uplink signal; or
the first signal is a signal on a sending beam of a Physical Uplink Shared Channel, PUSCH, the PUSCH is a PUSCH carries Msg3 in a random access process.

Optionally, the first signal includes a signal carried on at least one PRACH, and the uplink beam indication information includes type information of the PRACH.

Optionally, the uplink beam indication information is carried by one or more of: RRC signaling; MAC-CE signaling; DCI that triggers or schedules the first uplink signal.

Optionally, the DCI includes an uplink beam indication field that includes the uplink beam indication information.

Optionally, the uplink beam indication information includes at least one of:
information on the PRACH used by the terminal to determine the sending beam of the first uplink signal to the terminal;
information informing the terminal to use a sending beam of a default or predefined PRACH to determine the sending beam of the first uplink signal;
information informing the terminal to use a beam in a beam group corresponding to the sending beam of the PRACH to send the first uplink signal;
information informing the terminal to use the sending beam of the PRACH to send the first uplink signal;
information informing the terminal not to use the sending beam of the PRACH to determine the sending beam of the first uplink signal;
information informing the terminal to perform uplink sending beam scanning.

Optionally, the first uplink signal includes at least one of: SRS, PTRS, DMRS, uplink signal transmitted in PUCCH, and uplink signal transmitted in PUSCH.

Optionally, the uplink beam indication information includes beam scanning indication information, and coding states of the beam scanning indication information at least include:
a state for informing the terminal to perform global scanning of uplink sending beams;
a state for informing the terminal to perform local beam scanning of the sending beam of the first uplink signal based on a sending beam of the PRACH.

Optionally, the processor 1001 is further configured to: when the first signal is a signal carried on a PRACH, receive the first uplink signal by using a receiving beam corresponding to a sending beam of the PRACH.

Based on the same technical concept, embodiments of the application further provide a communication device, which may be a terminal and can implement the functions implemented at the terminal side in the process as shown in Fig. 2 in the embodiments of the application.

Referring to Fig. 11, it is a structural schematic diagram of a communication device provided by an embodiment of the application. As shown, the communication device may include: a processor 1101, a memory 1102, a transceiver 1103, and a bus interface 1104.

The processor 1101 is responsible for managing the bus architecture and general processing, and the memory 1102 may store the data used by the processor 1101 when performing the operations. The transceiver 1103 is configured to receive and send the data under the control of the processor 1101.

The bus architecture may include any numbers of interconnected buses and bridges, and specifically link various circuits of one or more processors represented by the processor 1101 and the memory represented by the memory 1102. The bus architecture may further link various other circuits such as peripheral device, voltage regulator and power management circuit, which are all well known in the art and thus will not be further described again herein. The bus interface provides an interface. The processor 1101 is responsible for managing the bus architecture and general processing, and the memory 1102 may store the data used by the processor 1101 when performing the operations.

The procedure disclosed by the embodiment of the present application may be applied in the processor 1101 or implemented by the processor 1101. In the implementation process, each step of the signal processing flow may be completed by the integrated logic circuit of hardware in the processor 1101 or the instruction in the form of software. The processor 1101 may be a general-purpose processor, a digital signal processor, an application specific integrated circuit, a field programmable gate array or other programmable logic device, a discrete gate or transistor logic device, or a discrete hardware component, and may implement or perform each method, step and logical block diagram disclosed in the embodiments of the present application. The general-purpose processor may be a microprocessor or any conventional processor or the like. The steps of the method disclosed in combination with the embodiments of the present application may be directly completed by a hardware processor, or completed by a combination of hardware and software modules in the processor. The software modules may be located in the random access memory, flash memory, read only memory, programmable read only memory or electrically erasable programmable read only memory, register and other mature storage medium in the art. The storage medium is located in the memory 1102, and the processor 1101 reads the information in the memory 1102 and completes the steps of the signal processing flow in combination with its hardware.

Specifically, the processor 1101 is configured to read computer instructions in the memory 1102 and perform the following process:
receiving the uplink beam indication information, herein the uplink beam indication information indicates a first signal for determining a sending beam of a first uplink signal, and the first signal includes a signal carried on a PRACH;
determining the sending beam of the first uplink signal according to the uplink beam indication information;
sending the first uplink signal by using the sending beam of the first uplink signal.

Optionally, the uplink beam indication information informs the terminal to use a sending beam of the PRACH as the sending beam of the first uplink signal.

Optionally, the first signal further includes at least one of: SRS, SSB, and CSI-RS.

Optionally, the uplink beam indication information includes indication information indicating whether the terminal uses a sending beam of the PRACH to determine the sending beam of the first uplink signal.

Optionally, the uplink beam indication information includes indication information informing the terminal to use a sending beam in a sending beam group where a sending beam of the PRACH is located as the sending beam of the first uplink signal.

Optionally, the processor 1101 is further configured to: receive the beam group indication information sent by the base station or the uplink beam indication information includes the beam group indication information, herein the beam group indication information indicates the sending beam group where the sending beam of the PRACH is located; and/or
receive the beam indication information sent by the base station or the uplink beam indication information includes the beam indication information, herein the beam indication information indicates beams in the sending beam group where the sending beam of the PRACH is located.

Optionally, the first signal is a signal carried on one or more PRACHs, and the uplink beam indication information includes information indicating the one or more PRACHs from a group of candidate PRACHs.

Optionally, the first signal is a signal carried on the latest PRACH carrying Msgl when the terminal initially accesses a cell where the first uplink signal is located, or
the first signal is a signal carried on the latest PRACH carrying Msgl in a cell where the uplink signal is located before that the terminal receives the uplink beam indication information; or
the first signal is a signal carried on the latest PRACH carrying Msgl in a cell corresponding to the first uplink signal before that the terminal receives the scheduling information of the first uplink signal; or
the first signal is a signal carried on the latest PRACH carrying Msgl in a cell corresponding to the first uplink signal before that the terminal receives the configuration information and/or trigger information of the first uplink signal; or
the first signal is a signal carried on the latest PRACH carrying Msgl in a cell corresponding to the first uplink signal before that the terminal sends the first uplink signal; or
the first signal is a signal on a sending beam of a PUSCH, the PUSCH is a PUSCH carries Msg3 in a random access process.

Optionally, the first signal includes a signal carried on at least one PRACH, and the uplink beam indication information includes type information of the PRACH.

Optionally, the uplink beam indication information is carried by one or more of: RRC signaling; MAC-CE signaling; DCI that triggers or schedules the first uplink signal.

Optionally, the DCI includes an uplink beam indication field that includes the uplink beam indication information.

Optionally, the uplink beam indication information includes at least one of:
information on the PRACH used by the terminal to determine the sending beam of the first uplink signal to the terminal;
information informing the terminal to use a sending beam of a default or predefined PRACH to determine the sending beam of the first uplink signal;
information informing the terminal to use a beam in a beam group corresponding to the sending beam of the PRACH to send the first uplink signal;
information informing the terminal to use the sending beam of the PRACH to send the first uplink signal;
information informing the terminal not to use the sending beam of the PRACH to determine the sending beam of the first uplink signal;
information informing the terminal to perform uplink sending beam scanning.

Optionally, the first uplink signal includes at least one of: SRS, PTRS, DMRS, uplink signal transmitted in PUCCH, and uplink signal transmitted in PUSCH.

Optionally, the uplink beam indication information includes beam scanning indication information, and coding states of the beam scanning indication information at least include:
a state for informing the terminal to perform global scanning of uplink sending beams;
a state for informing the terminal to perform local beam scanning of the sending beam of the first uplink signal based on a sending beam of the PRACH.

Optionally, if the uplink beam indication information contains the second information for indicating a signal identifier or index of the first signal in addition to the beam scanning indication information, the terminal determines the sending beam of the first uplink signal according to the first signal;
if the uplink beam indication information does not contain the second information, the terminal determines the sending beam of the first uplink signal according to the beam scanning indication information.

Optionally, the processor 1101 is configured to: send the first uplink signal by using the same spatial domain filtering as the spatial domain filtering of the PRACH indicated by the uplink beam indication information.

Based on the same technical concept, embodiments of the application further provide a communication device, which may be a base station and can implement the functions implemented at the base station side in the process as shown in Fig. 3 in the embodiments of the present application.

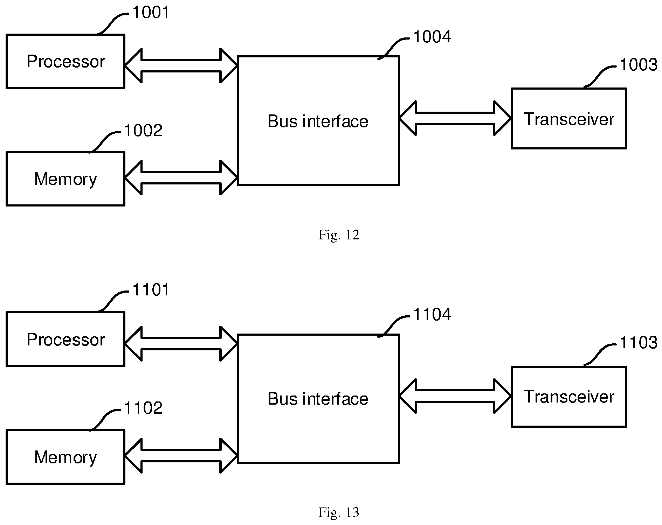

Referring to Fig. 12, it is a structural schematic diagram of a communication device provided by an embodiment of the application. As shown, the communication device may include: a processor 1001, a memory 1002, a transceiver 1003, and a bus interface 1004.

The processor 1001 is responsible for managing the bus architecture and general processing, and the memory 1002 may store the data used by the processor 1001 when performing the operations. The transceiver 1003 is configured to receive and send the data under the control of the processor 1001.

The bus architecture may include any numbers of interconnected buses and bridges, and specifically link various circuits of one or more processors represented by the processor 1001 and the memory represented by the memory 1002. The bus architecture may further link various other circuits such as peripheral device, voltage regulator and power management circuit, which are all well known in the art and thus will not be further described again herein. The bus interface provides an interface. The processor 1001 is responsible for managing the bus architecture and general processing, and the memory 1002 may store the data used by the processor 1001 when performing the operations.

The procedure disclosed by the embodiment of the present application may be applied in the processor 1001 or implemented by the processor 1001. In the implementation process, each step of the signal processing flow may be completed by the integrated logic circuit of hardware in the processor 1001 or the instruction in the form of software. The processor 1001 may be a general-purpose processor, a digital signal processor, an application specific integrated circuit, a field programmable gate array or other programmable logic device, a discrete gate or transistor logic device, or a discrete hardware component, and may implement or perform each method, step and logical block diagram disclosed in the embodiments of the present application. The general-purpose processor may be a microprocessor or any conventional processor or the like. The steps of the method disclosed in combination with the embodiments of the present application may be directly completed by a hardware processor, or completed by a combination of hardware and software modules in the processor. The software modules may be located in the random access memory, flash memory, read only memory, programmable read only memory or electrically erasable programmable read only memory, register and other mature storage medium in the art. The storage medium is located in the memory 1002, and the processor 1001 reads the information in the memory 1002 and completes the steps of the signal processing flow in combination with its hardware.

Specifically, the processor 1001 is configured to read computer instructions in the memory 1002 and perform the following process:
instructing a terminal to send a first uplink signal;
taking a receiving beam corresponding to a sending beam of a PRACH as a default receiving beam of the first uplink signal.

Optionally, the processor 1001 is further configured to: receive the first uplink signal by using the same spatial domain filtering as the spatial domain filtering for receiving the PRACH.

Optionally, the PRACH is the latest PRACH carrying Msgl when the terminal initially accesses a cell where the first uplink signal is located; or
the PRACH is the latest PRACH carrying Msgl in a cell where the uplink signal is located before that the terminal receives the uplink beam indication information; or
the PRACH is the latest PRACH carrying Msgl in a cell corresponding to the first uplink signal before that the terminal receives the scheduling information of the first uplink signal; or
the PRACH is the latest PRACH carrying Msgl in a cell corresponding to the first uplink signal before that the terminal receives the configuration information and/or trigger information of the first uplink signal; or
the PRACH is the latest PRACH carrying Msgl in a cell corresponding to the first uplink signal before that the terminal sends the first uplink signal; or
the PRACH is a sending beam of a PUSCH, the PUSCH is a PUSCH carries Msg3 in a random access process.

Optionally, the first uplink signal includes at least one of: SRS, PTRS, DMRS, uplink signal transmitted in PUCCH, and uplink signal transmitted in PUSCH.

Based on the same technical concept, embodiments of the application further provide a communication device, which may be a terminal and can implement the functions implemented at the terminal side in the process as shown in Fig. 4 in the embodiments of the application.

Referring to Fig. 13, it is a structural schematic diagram of a communication device provided by an embodiment of the application. As shown, the communication device may include: a processor 1101, a memory 1102, a transceiver 1103, and a bus interface 1104.

The processor 1101 is responsible for managing the bus architecture and general processing, and the memory 1102 may store the data used by the processor 1101 when performing the operations. The transceiver 1103 is configured to receive and send the data under the control of the processor 1101.

The bus architecture may include any numbers of interconnected buses and bridges, and specifically link various circuits of one or more processors represented by the processor 1101 and the memory represented by the memory 1102. The bus architecture may further link various other circuits such as peripheral device, voltage regulator and power management circuit, which are all well known in the art and thus will not be further described again herein. The bus interface provides an interface. The processor 1101 is responsible for managing the bus architecture and general processing, and the memory 1102 may store the data used by the processor 1101 when performing the operations.

The procedure disclosed by the embodiment of the present application may be applied in the processor 1101 or implemented by the processor 1101. In the implementation process, each step of the signal processing flow may be completed by the integrated logic circuit of hardware in the processor 1101 or the instruction in the form of software. The processor 1101 may be a general-purpose processor, a digital signal processor, an application specific integrated circuit, a field programmable gate array or other programmable logic device, a discrete gate or transistor logic device, or a discrete hardware component, and may implement or perform each method, step and logical block diagram disclosed in the embodiments of the present application. The general-purpose processor may be a microprocessor or any conventional processor or the like. The steps of the method disclosed in combination with the embodiments of the present application may be directly completed by a hardware processor, or completed by a combination of hardware and software modules in the processor. The software modules may be located in the random access memory, flash memory, read only memory, programmable read only memory or electrically erasable programmable read only memory, register and other mature storage medium in the art. The storage medium is located in the memory 1102, and the processor 1101 reads the information in the memory 1102 and completes the steps of the signal processing flow in combination with its hardware.

Specifically, the processor 1101 is configured to read computer instructions in the memory 1102 and perform the following process:
determining a default sending beam of a first uplink signal according to a sending beam of a PRACH.

Optionally, the processor 1101 is further configured to: send the first uplink signal by using the default sending beam when a first condition is met; the first condition is: a base station instructs the terminal to send the first uplink signal, and the terminal has established an RRC connection with the base station but has not received uplink beam indication information, the uplink beam indication information indicates a first signal for determining a sending beam of the first uplink signal, and the first signal includes a signal carried on the Physical Random Access Channel (PRACH).

Optionally, the processor 1101 is configured to: take the sending beam of the PRACH as the default sending beam of the first uplink signal.

Optionally, the PRACH is a PRACH where the terminal sends Msgl for the last time when the terminal initially accesses a cell where the first uplink signal is located; or
the PRACH is the latest PRACH carrying Msg 1 in a cell where the uplink signal is located before that the terminal receives the uplink beam indication information; or
the PRACH is the latest PRACH carrying Msgl in a cell corresponding to the first uplink signal before that the terminal receives the scheduling information of the first uplink signal; or
the PRACH is the latest PRACH carrying Msgl in a cell corresponding to the first uplink signal before that the terminal receives the configuration information and/or trigger information of the first uplink signal; or
the PRACH is the latest PRACH carrying Msgl in a cell corresponding to the first uplink signal before that the terminal sends the first uplink signal; or
the PRACH is a sending beam of a PUSCH, the PUSCH is a PUSCH carries Msg3 in a random access process.

Optionally, the first uplink signal includes at least one of: SRS, PTRS, DMRS, uplink signal transmitted in PUCCH, and uplink signal transmitted in PUSCH.

Based on the same technical concept, embodiments of the application further provide a computer readable storage medium. The computer readable storage medium stores computer executable instructions that are configured to cause the computer to perform the process executed by the base station in Fig. 2 or Fig. 3.

Based on the same technical concept, embodiments of the present application further provide a computer readable storage medium. The computer readable storage medium stores computer executable instructions that are configured to cause the computer to perform the process executed by the terminal in Fig. 2 or Fig. 4.

The application is described by reference to the flow charts and/or the block diagrams of the methods, the devices (systems) and the computer program products according to the embodiments of the present application. It should be understood that each process and/or block in the flow charts and/or the block diagrams, and a combination of processes and/or blocks in the flow charts and/or the block diagrams can be implemented by the computer program instructions. These computer program instructions can be provided to a general-purpose computer, a dedicated computer, an embedded processor, or a processor of another programmable data processing device to produce a machine, so that an apparatus for implementing the functions specified in one or more processes of the flow charts and/or one or more blocks of the block diagrams is produced by the instructions executed by the computer or the processor of another programmable data processing device.

These computer program instructions can also be stored in a computer readable memory which is capable of guiding the computer or another programmable data processing device to operate in a particular way, so that the instructions stored in the computer readable memory produce a manufacture including the instruction apparatus which implements the functions specified in one or more processes of the flow charts and/or one or more blocks of the block diagrams.

These computer program instructions can also be loaded onto the computer or another programmable data processing device, so that a series of operation steps are performed on the computer or another programmable device to produce the computer-implemented processing. Thus the instructions executed on the computer or another programmable device provide steps for implementing the functions specified in one or more processes of the flow charts and/or one or more blocks of the block diagrams.

Although the preferred embodiments of the present application have been described, those skilled in the art can make additional alterations and modifications to these embodiments once they learn about the basic creative concepts. Thus the attached claims are intended to be interpreted to include the preferred embodiments as well as all the alterations and modifications falling within the scope of the present application.

Evidently those skilled in the art can make various modifications and variations to the present application without departing from the spirit and scope of the present application. Thus the present application is also intended to encompass these modifications and variations therein as long as these modifications and variations to the present application come into the scope of the claims of the present application and their equivalents.

## Claims

1. A signal transmission method, comprising:
instructing, by a base station, a terminal to send a first uplink signal; and
sending, by the base station, uplink beam indication information to the terminal;
wherein the uplink beam indication information indicates a first signal for determining a sending beam of the first uplink signal, and the first signal comprises a signal carried on a Physical Random Access Channel, PRACH.

2. The method of claim 1, wherein the uplink beam indication information informs the terminal to use a sending beam of the PRACH to determine the sending beam of the first uplink signal.

3. The method of claim 1, wherein the first signal further comprises at least one of: Sounding Reference Signal, SRS; Synchronization Signal/physical broadcast channel Block, SSB; and Channel State Information Reference Signal, CSI-RS.

4. The method of claim 1, wherein the uplink beam indication information comprises indication information indicating whether the terminal uses a sending beam of the PRACH to determine the sending beam of the first uplink signal.

5. The method of claim 1, wherein the uplink beam indication information comprises indication information informing the terminal to use a sending beam in a sending beam group where a sending beam of the PRACH is located as the sending beam of the first uplink signal.

6. The method of claim 5, further comprising:
sending, by the base station, beam group indication information to the terminal or the uplink beam indication information comprises beam group indication information, wherein the beam group indication information indicates the sending beam group where the sending beam of the PRACH is located; and/or
sending, by the base station, beam indication information to the terminal or the uplink beam indication information comprises beam indication information, wherein the beam indication information indicates a beam in the sending beam group where the sending beam of the PRACH is located.

7. The method of claim 1, wherein the first signal is a signal carried on one or more PRACHs, and the uplink beam indication information comprises information indicating the one or more PRACHs from a group of candidate PRACHs.

8. The method of claim 1, wherein:
the first signal is a signal carried on the latest PRACH carrying Msgl when the terminal initially accesses a cell where the first uplink signal is located; or
the first signal is a signal carried on the latest PRACH carrying Msgl in a cell where the first uplink signal is located before that the terminal receives the uplink beam indication information; or
the first signal is a signal carried on the latest PRACH carrying Msgl in a cell corresponding to the first uplink signal before that the terminal receives scheduling information of the first uplink signal; or
the first signal is a signal carried on the latest PRACH carrying Msgl in a cell corresponding to the first uplink signal before that the terminal receives configuration information and/or trigger information of the first uplink signal; or
the first signal is a signal carried on the latest PRACH carrying Msgl in a cell corresponding to the first uplink signal before that the terminal sends the first uplink signal; or
the first signal is a signal on a sending beam of a Physical Uplink Shared Channel, PUSCH, wherein the PUSCH is a PUSCH carries Msg3 in a random access process.

9. The method of claim 1, wherein the first signal comprises a signal carried on at least one PRACH, and the uplink beam indication information comprises type information of the PRACH.

10. The method of claim 1, wherein the uplink beam indication information is carried by one or more of:
Radio Resource Control, RRC, signaling;
MAC Control Element, MAC-CE, signaling;
Downlink Control Information, DCI, that triggers or schedules the first uplink signal.

11. The method of claim 10, wherein the DCI comprises an uplink beam indication field that comprises the uplink beam indication information.

12. The method of claim 1, wherein the uplink beam indication information comprises at least one of:
information on the PRACH used by the terminal to determine the sending beam of the first uplink signal;
information informing the terminal to use a sending beam of a default or predefined PRACH to determine the sending beam of the first uplink signal;
information informing the terminal to use a beam in a beam group corresponding to a sending beam of the PRACH to send the first uplink signal;
information informing the terminal to use the sending beam of the PRACH to send the first uplink signal;
information informing the terminal not to use the sending beam of the PRACH to determine the sending beam of the first uplink signal;
information informing the terminal to perform uplink sending beam scanning.

13. The method of claim 1, wherein the first uplink signal comprises at least one of:
SRS; Phase-Tracking Reference Signal, PTRS; Demodulation Reference Signal, DMRS; uplink signal transmitted in PUCCH; and uplink signal transmitted in PUSCH.

14. The method of claim 1, wherein the uplink beam indication information comprises beam scanning indication information, and coding states of the beam scanning indication information at least comprise:
a state for informing the terminal to perform global scanning of uplink sending beams; and
a state for informing the terminal to perform local beam scanning of the sending beam of the first uplink signal based on a sending beam of the PRACH.

15. The method of any one of claims 1 to 14, wherein the first signal is the signal carried on the PRACH, and the method further comprises:
receiving, by the base station, the first uplink signal by using a receiving beam corresponding to a sending beam of the PRACH.

16. A signal transmission method, comprising:
receiving, by a terminal, uplink beam indication information, wherein the uplink beam indication information indicates a first signal for determining a sending beam of a first uplink signal, and the first signal comprises a signal carried on a PRACH;
determining, by the terminal, the sending beam of the first uplink signal according to the uplink beam indication information;
sending, by the terminal, the first uplink signal by using the sending beam of the first uplink signal.

17. The method of claim 16, wherein the uplink beam indication information informs the terminal to use a sending beam of the PRACH as the sending beam of the first uplink signal.

18. The method of claim 16, wherein the first signal further comprises at least one of: Sounding Reference Signal, SRS; Synchronization Signal/physical broadcast channel Block, SSB; and Channel State Information Reference Signal, CSI-RS.

19. The method of claim 16, wherein the uplink beam indication information comprises indication information informing whether the terminal uses a sending beam of the PRACH to determine the sending beam of the first uplink signal.

20. The method of claim 16, wherein the uplink beam indication information comprises indication information informing the terminal to use a sending beam in a sending beam group where a sending beam of the PRACH is located as the sending beam of the first uplink signal.

21. The method of claim 20, further comprising:
receiving, by the terminal, beam group indication information sent by a base station or the uplink beam indication information comprises beam group indication information, wherein the beam group indication information indicates the sending beam group where the sending beam of the PRACH is located; and/or
receiving, by the terminal, beam indication information sent by a base station or the uplink beam indication information comprises beam indication information, wherein the beam indication information indicates a beam in the sending beam group where the sending beam of the PRACH is located.

22. The method of claim 16, wherein the first signal is a signal carried on one or more PRACHs, and the uplink beam indication information comprises information indicating the one or more PRACHs from a group of candidate PRACHs.

23. The method of claim 16, wherein:
the first signal is a signal carried on the latest PRACH carrying Msgl when the terminal initially accesses a cell where the first uplink signal is located; or
the first signal is a signal carried on the latest PRACH carrying Msg1 in a cell where the uplink signal is located before that the terminal receives the uplink beam indication information; or
the first signal is a signal carried on the latest PRACH carrying Msgl in a cell corresponding to the first uplink signal before that the terminal receives scheduling information of the first uplink signal; or
the first signal is a signal carried on the latest PRACH carrying Msgl in a cell corresponding to the first uplink signal before that the terminal receives configuration information and/or trigger information of the first uplink signal; or
the first signal is a signal carried on the latest PRACH carrying Msgl in a cell corresponding to the first uplink signal before that the terminal sends the first uplink signal; or
the first signal is a signal sent on a sending beam of a PUSCH, wherein the PUSCH is a PUSCH carries Msg3 is sent in a random access process.

24. The method of claim 16, wherein the first signal comprises a signal carried on at least one PRACH, and the uplink beam indication information comprises type information of the PRACH.

25. The method of claim 16, wherein the uplink beam indication information is carried by one or more of:
RRC signaling;
MAC-CE signaling;
Downlink Control Information, DCI, that triggers or schedules the first uplink signal.

26. The method of claim 25, wherein the DCI comprises an uplink beam indication field that comprises the uplink beam indication information.

27. The method of claim 16, wherein the uplink beam indication information comprises at least one of:
information on the PRACH used by the terminal to determine the sending beam of the first uplink signal;
information informing the terminal to use a sending beam of a default or predefined PRACH to determine the sending beam of the first uplink signal;
information informing the terminal to use a beam in a beam group corresponding to a sending beam of the PRACH to send the first uplink signal;
information informing the terminal to use the sending beam of the PRACH to send the first uplink signal;
information informing the terminal not to use the sending beam of the PRACH to determine the sending beam of the first uplink signal;
information informing the terminal to perform uplink sending beam scanning.

28. The method of claim 16, wherein the first uplink signal comprises at least one of:
SRS; Phase-Tracking Reference Signal, PTRS; Demodulation Reference Signal, DMRS; uplink signal transmitted in PUCCH; and uplink signal transmitted in PUSCH.

29. The method of claim 16, wherein the uplink beam indication information comprises beam scanning indication information, and coding states of the beam scanning indication information at least comprise:
a state for informing the terminal to perform global scanning of uplink sending beams; and
a state for informing the terminal to perform local beam scanning of the sending beam of the first uplink signal based on a sending beam of the PRACH.

30. The method of claim 29, wherein:
when the uplink beam indication information comprises second information for indicating a signal identifier or index of the first signal in addition to the beam scanning indication information, the terminal determines the sending beam of the first uplink signal according to the first signal;
when the uplink beam indication information does not comprise the second information, the terminal determines the sending beam of the first uplink signal according to the beam scanning indication information.

31. The method of any one of claims 16 to 30, wherein said sending, by the terminal, the first uplink signal by using the sending beam of the first uplink signal, comprises:
sending, by the terminal, the first uplink signal by using a spatial domain filtering same as a spatial domain filtering of the PRACH indicated by the uplink beam indication information.

32. A beam determination method, comprising:
instructing, by a base station, a terminal to send a first uplink signal;
determining, by the base station, a receiving beam corresponding to a sending beam of a PRACH as a default receiving beam of the first uplink signal.

33. The method of claim 32, further comprising:
receiving, by the base station, the first uplink signal by using a spatial domain filtering same as a spatial domain filtering for receiving the PRACH.

34. The method of claim 32, wherein:
the PRACH is the latest PRACH carrying Msgl when the terminal initially accesses a cell where the first uplink signal is located; or
the PRACH is the latest PRACH carrying Msgl in a cell where the uplink signal is located before that the terminal receives the uplink beam indication information; or
the PRACH is the latest PRACH carrying Msgl in a cell corresponding to the first uplink signal before that the terminal receives scheduling information of the first uplink signal; or
the PRACH is the latest PRACH carrying Msgl in a cell corresponding to the first uplink signal before that the terminal receives configuration information and/or trigger information of the first uplink signal; or
the PRACH is the latest PRACH carrying Msgl in a cell corresponding to the first uplink signal before that the terminal sends the first uplink signal; or
the PRACH is a sending beam of a PUSCH, wherein the PUSCH is a PUSCH carries Msg3 is sent in a random access process.

35. The method of any one of claims 32 to 34, wherein the first uplink signal comprises at least one of:
SRS, PTRS, DMRS, uplink signal transmitted in PUCCH, and uplink signal transmitted in PUSCH.

36. A signal transmission method, comprising:
determining, by a terminal, a default sending beam of a first uplink signal according to a sending beam of a PRACH.

37. The method of claim 36, further comprising:
sending, by the terminal, the first uplink signal by using the default sending beam when a first condition is met; wherein the first condition is:
a base station instructs the terminal to send the first uplink signal, and the terminal has established an RRC connection with the base station but has not received uplink beam indication information, wherein the uplink beam indication information indicates a first signal for determining a sending beam of the first uplink signal, and the first signal comprises a signal carried on the PRACH.

38. The method of claim 36, wherein said determining, by the terminal, the default sending beam of the first uplink signal according to the sending beam of the PRACH, comprises:
determining, by the terminal, a sending beam of the PRACH as the default sending beam of the first uplink signal.

39. The method of claim 36, wherein:
the PRACH is the latest PRACH carrying Msgl when the terminal initially accesses a cell where the first uplink signal is located; or
the PRACH is the latest PRACH carrying Msgl in a cell where the uplink signal is located before that the terminal receives uplink beam indication information; or
the PRACH is the latest PRACH carrying Msgl in a cell corresponding to the first uplink signal before that the terminal receives scheduling information of the first uplink signal; or
the PRACH is the latest PRACH carrying Msgl in a cell corresponding to the first uplink signal before that the terminal receives configuration information and/or trigger information of the first uplink signal; or
the PRACH is the latest PRACH carrying Msgl in a cell corresponding to the first uplink signal before that the terminal sends the first uplink signal; or
the PRACH is a sending beam of a PUSCH, wherein the PUSCH is a PUSCH carries Msg3 is sent in a random access process.

40. The method of any one of claims 36 to 39, wherein the first uplink signal comprises at least one of:
SRS; Phase-Tracking Reference Signal, PTRS; Demodulation Reference Signal, DMRS; uplink signal transmitted in PUCCH; and uplink signal transmitted in PUSCH.

41. Abase station, comprising:
a sending module configured to instruct a terminal to send a first uplink signal, and send uplink beam indication information to the terminal, wherein the uplink beam indication information indicates a first signal for determining a sending beam of the first uplink signal, and the first signal comprises a signal carried on a Physical Random Access Channel, PRACH.

42. A terminal, comprising:
a receiving module configured to receive uplink beam indication information, wherein the uplink beam indication information indicates a first signal for determining a sending beam of a first uplink signal, and the first signal comprises a signal carried on a PRACH;
a processing module configured to determine the sending beam of the first uplink signal according to the uplink beam indication information;
a sending module configured to send the first uplink signal by using the sending beam of the first uplink signal.

43. Abase station, comprising:
a sending module configured to instruct a terminal to send a first uplink signal;
a receiving module configured to determine a receiving beam corresponding to a sending beam of a PRACH as a default receiving beam of the first uplink signal.

44. A terminal, comprising:
a processing module configured to determine a default sending beam of a first uplink signal according to a sending beam of a PRACH.

45. A communication device, comprising: a processor, a memory and a transceiver; wherein the transceiver is configured to receive or send information under control of the processor; and the processor is configured to read computer instructions in the memory to perform the method of any one of claims 1 to 15.

46. A communication device, comprising: a processor, a memory and a transceiver; wherein the transceiver is configured to receive or send information under control of the processor; and the processor is configured to read computer instructions in the memory to perform the method of any one of claims 16 to 31.

47. A communication device, comprising: a processor, a memory and a transceiver; wherein the transceiver is configured to receive or send information under control of the processor; and the processor is configured to read computer instructions in the memory to perform the method of any one of claims 32 to 35.

48. A communication device, comprising: a processor, a memory and a transceiver; wherein the transceiver is configured to receive or send information under control of the processor; and the processor is configured to read computer instructions in the memory to perform the method of any one of claims 36 to 40.

49. A computer readable storage medium, wherein the computer readable storage medium stores computer executable instructions which are configured to cause the computer to perform the method of any one of claims 1 to 15.

50. A computer readable storage medium, wherein the computer readable storage medium stores computer executable instructions which are configured to cause the computer to perform the method of any one of claims 16 to 31.

51. A computer readable storage medium, wherein the computer readable storage medium stores computer executable instructions which are configured to cause the computer to perform the method of any one of claims 32 to 35.

52. A computer readable storage medium, wherein the computer readable storage medium stores computer executable instructions which are configured to cause the computer to perform the method of any one of claims 36 to 40.
